# EUROPEAN PATENT APPLICATION

(11) **EP 4 745 805 A1**
(43) Date of publication of application: **20.05.2026**
(21) Application number: 24853573.4
(22) Date of filing: 01.08.2024
(51) Int. Cl.: G06F 18/21

(54) **MACHINE LEARNING MODEL EVALUATION METHOD, DATA PROCESSING METHOD AND RELATED DEVICE**

(30) Priority: 15.08.2023 CN 202311033757
(71) Applicant: Huawei Technologies Co., Ltd., Shenzhen, Guangdong 518129 (CN)
(72) Inventor: WANG, Zhitao, Shenzhen, Guangdong 518129 (CN); SUN, Kai, Shenzhen, Guangdong 518129 (CN); CHENG, Siyuan, Shenzhen, Guangdong 518129 (CN); CHEN, Yuying, Shenzhen, Guangdong 518129 (CN)
(74) Representative: Goddar, Heinz J.
(86) International application number: PCT/CN2024/109152
(87) International publication number: WO 2025/036161

(57) **Abstract**

A machine learning model evaluation method, a data processing method, and a related device are disclosed. The method may be applied to the autonomous driving field of artificial intelligence. The method includes: processing a plurality of pieces of segmented data in an evaluation sample by using a machine learning model, to obtain a plurality of prediction labels, and determining a parameter value of at least one evaluation indicator. The evaluation sample includes description data of a traffic scene within first duration, the segmented data includes description data of the traffic scene within first sub-duration, and the first duration includes the first sub-duration. The at least one evaluation indicator indicates stability and/or accuracy corresponding to the plurality of prediction labels, and the accuracy is obtained based on ground-truths corresponding to the plurality of pieces of segmented data. "Constructing an evaluation indicator at a granularity of a traffic scene" can more accurately indicate performance of a machine learning model applied to a vehicle traveling process, and no simulated traffic scene needs to be built, so that consumption of computer resources is reduced, and evaluation efficiency is improved.

## Description

This application claims priority to Chinese Patent Application No. 202311033757.6, filed with the China National Intellectual Property Administration on August 15, 2023, and entitled "MACHINE LEARNING MODEL EVALUATION METHOD, DATA PROCESSING METHOD, AND RELATED DEVICE", which is incorporated herein by reference in its entirety.

### TECHNICAL FIELD

This application relates to the artificial intelligence field, and in particular, to a machine learning model evaluation method, a data processing method, and a related device.

### BACKGROUND

Artificial intelligence (Artificial Intelligence, AI) is a theory, a method, a technology, and an application system in which human intelligence is simulated, extended, and expanded by using a digital computer or a machine controlled by a digital computer, to perceive an environment, obtain knowledge, and achieve an optimal result by using the knowledge. In other words, the artificial intelligence is a branch of computer science and is intended to understand essence of intelligence and produce a new intelligent machine that can react in a manner similar to human intelligence. The artificial intelligence is to study design principles and implementation methods of various intelligent machines, to enable the machines to have perception, inference, and decision-making functions. Applying a machine learning model to the autonomous driving field is a common application mode of the artificial intelligence.

Currently, to evaluate a trained machine learning model, a simulated traffic environment may be built, to enable a vehicle carrying the machine learning model to travel in the simulated traffic environment, so that performance of a plurality of machine learning models can be evaluated.

However, a large quantity of computer resources are consumed for building the simulated traffic environment, and it takes a long time to build the simulated traffic environment, leading to low evaluation efficiency.

### SUMMARY

To resolve the foregoing technical problem, this application provides a machine learning model evaluation method, a data processing method, and a related device. A used evaluation indicator is constructed at a granularity of a traffic scene. Because a vehicle traveling process is continuous, "constructing the evaluation indicator at the granularity of a traffic scene" can more accurately indicate performance of a machine learning model applied to the vehicle traveling process. In addition, in the solutions provided in this application, no simulated traffic scene needs to be built, so that consumption of computer resources during evaluation of the machine learning model is reduced, and evaluation efficiency is improved.

The technical solutions provided in this application are as follows.

According to a first aspect, an embodiment of this application provides a machine learning model evaluation method. The method may be applied to the autonomous driving field of artificial intelligence. The method includes: A first device obtains a first evaluation sample, where the first evaluation sample includes description data of a first traffic scene within first duration, the first evaluation sample includes a plurality of pieces of first segmented data, each piece of first segmented data includes description data of the first traffic scene within first sub-duration, and the first duration may include one or more pieces of first sub-duration. For example, the description data may be specifically represented as a video, an image, a scene description file, or another type of data. For example, the scene description file may include a location, a speed, an acceleration, or other status information of each road user in the first traffic scene.

The first device processes the plurality of pieces of first segmented data by using a first machine learning model, to obtain a plurality of first prediction labels that are in a one-to-one correspondence with the plurality of pieces of first segmented data, and then determines a first parameter value of the at least one evaluation indicator based on the plurality of first prediction labels.

The at least one evaluation indicator indicates stability of the plurality of first prediction labels generated by the first machine learning model, and/or the at least one evaluation indicator indicates accuracy of the plurality of first prediction labels generated by the first machine learning model in the first traffic scene, where the accuracy of the plurality of first prediction labels is obtained based on the plurality of first prediction labels and ground-truths corresponding to the plurality of pieces of first segmented data.

For example, the first evaluation indicator may represent a quantity of transitions between the plurality of first prediction labels, and a smaller quantity of transitions between the plurality of first prediction labels indicates higher stability of the plurality of first prediction labels. For another example, the first evaluation indicator may represent frequency of transitions between the plurality of first prediction labels, and the frequency of transitions between the plurality of first prediction labels may be a ratio of a quantity of transitions between the plurality of first prediction labels to a total quantity of the plurality of first prediction labels. Lower frequency of transitions between the plurality of first prediction labels indicates higher stability of the plurality of first prediction labels. The "accuracy of the plurality of first prediction labels" may be represented by an accuracy rate of the plurality of first prediction labels. The accuracy rate of the first prediction labels may represent a ratio of a quantity of first prediction labels, among the plurality of first prediction labels, that are consistent with ground-truths to the total quantity of the plurality of first prediction labels.

In this implementation, the first machine learning model generates a plurality of first prediction labels for description data of a specific traffic scene, and then evaluates performance of the first machine learning model in the traffic scene based on the plurality of first prediction labels. A used evaluation indicator indicates stability of the plurality of first prediction labels generated by the first machine learning model, and/or at least one evaluation indicator indicates accuracy of the plurality of first prediction labels generated by the first machine learning model in the first traffic scene. That is, an evaluation indicator used in this application is constructed at a granularity of a traffic scene. Because a vehicle traveling process is continuous, "constructing the evaluation indicator at the granularity of a traffic scene" can more accurately indicate performance of a machine learning model applied to the vehicle traveling process. In addition, in the solutions provided in this application, no simulated traffic scene needs to be built, so that consumption of computer resources during evaluation of the machine learning model is reduced, and evaluation efficiency is improved.

In a possible implementation of the first aspect, the first evaluation sample may be obtained based on road test data, and the road test data includes description data of a traffic scene that is collected when an autonomous vehicle travels on a road. Optionally, the road test data may include description data of a traffic scene that is collected when the autonomous vehicle travels on a real road. The "autonomous vehicle" may be configured to be in a fully or partially autonomous driving mode. In this implementation, because the first machine learning model is configured on the vehicle to implement the autonomous driving mode of the vehicle, a behavior of "evaluating performance of the first machine learning model by using the road test data" makes a "process of evaluating the first machine learning model" more similar to an "actual application process of the first machine learning model", so that an obtained evaluation result is more accurate.

In a possible implementation of the first aspect, the first parameter value, obtained based on the first evaluation sample, of the at least one evaluation indicator failing to meet a second condition indicates that the first machine learning model fails evaluation in the first traffic scene. In this implementation, a condition for determining that the first machine learning model fails evaluation in a specific traffic scene is specified, so that implementation difficulty of the solution is reduced.

In a possible implementation of the first aspect, when the stability of the plurality of prediction labels that correspond to the first evaluation sample and that are generated by the first machine learning model does not meet a first subcondition, and/or when the accuracy of the plurality of prediction labels corresponding to the first evaluation sample does not meet a second subcondition, it is considered that the first parameter value of the at least one evaluation indicator does not meet the second condition.

For example, when the quantity of transitions between the plurality of prediction labels corresponding to the first evaluation sample is greater than or equal to a preset quantity of times, it can be considered that the stability of the plurality of first prediction labels does not meet the first subcondition; or when the frequency of transitions between the plurality of prediction labels corresponding to the first evaluation sample is greater than or equal to a preset value, it can be considered that the stability of the plurality of first prediction labels does not meet the first subcondition.

When the accuracy rate of the plurality of prediction labels corresponding to the first evaluation sample is less than or equal to a preset accuracy rate, it can be considered that the accuracy of the plurality of first prediction labels does not meet the second subcondition.

In a possible implementation of the first aspect, after the first device determines the first parameter value of the at least one evaluation indicator based on the plurality of first prediction labels, the method further includes: The first device processes a first training sample by using a second machine learning model, to obtain a second prediction label corresponding to the first training sample, where a similarity between the first training sample and a second evaluation sample meets a first condition, both the first training sample and the second evaluation sample include description data of the traffic scene, and the second evaluation sample is an evaluation sample that is obtained during evaluation of the first machine learning model and in which a parameter value of the at least one evaluation indicator does not meet a second condition. It should be noted that the "second evaluation sample" and the "first evaluation sample" have similar meanings, and both are evaluation samples in an evaluation sample set of the first machine learning model. A difference lies in: The "first evaluation sample" is any evaluation sample used to evaluate the first machine learning model. However, a parameter value, obtained by evaluating the first machine learning model by using the "second evaluation sample", of the at least one evaluation indicator does not meet the second condition.

The first device processes a second training sample by using the second machine learning model, to obtain a second prediction label corresponding to the second training sample, where the second training sample is different from the first training sample; and processes the second training sample by using the first machine learning model, to obtain a first prediction label corresponding to the second training sample.

The first device updates the second machine learning model based on a first loss term and a second loss term, where the first loss term indicates a similarity between the second prediction label corresponding to the first training sample and a ground-truth corresponding to the first training sample, and the second loss term indicates a similarity between the second prediction label corresponding to the second training sample and the first prediction label corresponding to the second training sample.

In this implementation, the similarity between the first training sample and the second evaluation sample meets the first condition, and the parameter value, obtained by evaluating the first machine learning model by using the second evaluation sample, of the at least one evaluation indicator does not meet the second condition, that is, when the first machine learning model is evaluated by using the second evaluation sample, performance of the first machine learning model is poor. Therefore, the first loss term indicates the similarity between the second prediction label corresponding to the first training sample and the ground-truth corresponding to the first training sample, to help improve performance of the second machine learning model in a traffic scene corresponding to the first evaluation sample. The second training sample is different from the first training sample. To be specific, the first machine learning model has higher performance in a traffic scene corresponding to the second training sample. The second loss term indicates the similarity between the second prediction label corresponding to the second training sample and the first prediction label corresponding to the second training sample, to enable the second machine learning model to learn superb performance of the first machine learning model in the traffic scene corresponding to the second training sample. Therefore, a trained second machine learning model not only has high performance in the traffic scene corresponding to the second evaluation sample, but also has high performance in the traffic scene corresponding to the second training sample. That is, a second machine learning model capable of performing well in all traffic scenes can be obtained.

In a possible implementation of the first aspect, the method further includes: The first device performs feature extraction on the second evaluation sample by using the first machine learning model, to obtain feature information of the second evaluation sample. For example, the feature information of the second evaluation sample may include feature information of each of at least one piece of segmented data included in the second evaluation sample. The first device may determine a first training sample set from a training sample set based on the feature information of the second evaluation sample and feature information of a training sample of the first machine learning model, where the training sample set includes a plurality of training samples of the first machine learning model, the first training sample set includes the first training sample, and a similarity between feature information of the first training sample and the feature information of the second evaluation sample meets the first condition.

In this implementation, training samples are manually classified based on different traffic scenes, which are not necessarily consistent with different traffic scenes understood by a machine learning model. A plurality of first training samples are obtained from the training sample set based on a similarity between feature information of each second evaluation sample and feature information of each training sample. To be specific, the plurality of obtained first training samples are samples that the first machine learning model considers similar to the second evaluation sample. In this way, a training sample that the first machine learning model is not good at processing can be found from a perspective of the machine learning model, to increase a probability that each first training sample is a training sample that the first machine learning model is not good at processing. Therefore, the second machine learning model learns a ground-truth corresponding to the first training sample when processing the first training sample. This helps obtain a second machine learning model with higher performance.

In a possible implementation of the first aspect, the similarity between the feature information of the first training sample and the feature information of the second evaluation sample may be obtained based on a first similarity between the feature information of the first training sample and the feature information of each of the at least one piece of segmented data included in the second evaluation sample. To be specific, the similarity between the feature information of the first training sample and the feature information of the second evaluation sample may be obtained based on at least one first similarity that is in a one-to-one correspondence with the at least one piece of segmented data included in the second evaluation sample. For example, the similarity between the feature information of the first training sample and the feature information of the second evaluation sample may be an average value of the at least one first similarity, or the similarity between the feature information of the first training sample and the feature information of the second evaluation sample may be a median of the at least one first similarity.

In a possible implementation of the first aspect, an evaluation sample set of the first machine learning model includes a plurality of evaluation samples, a target evaluation sample is any evaluation sample in the evaluation sample set of the first machine learning model, the target evaluation sample is obtained based on travel data, the travel data includes description data of the traffic scene and a raw label corresponding to the description data of the traffic scene, and the target evaluation sample includes the description data of the traffic scene and a ground-truth corresponding to the description data of the traffic scene.

When the travel data is a negative sample, the ground-truth in the target evaluation sample is obtained by modifying the raw label in the travel data. That "the travel data is a negative sample" may indicate that an action indicated by the raw label in the travel data is not suitable for being performed in the traffic scene. In this implementation, a travel sample being a negative sample indicates that an action indicated by a raw label corresponding to description data of a traffic scene is not suitable for the traffic scene. In this case, the raw label is modified to obtain a ground-truth in the target evaluation sample, to ensure that all actions indicated by ground-truths in the evaluation sample are actions adapting to the traffic scene. This helps improve accuracy of an evaluation result.

In a possible implementation of the first aspect, when the travel data is the negative sample, the travel data includes description data of the traffic scene within second duration, the target evaluation sample includes description data of the traffic scene within third duration, and the second duration is greater than the third duration. For example, description data within a first time period that is included in description data, included in the target travel data, of a target traffic scene within the second duration may be deleted, to obtain description data, included in the target evaluation sample, of the target traffic scene within the third duration. The description data within the first time period includes description data within preset duration that is counted from back to front in the second duration.

In this implementation, when the target travel data is a negative sample, a second half of data in the description data, included in the target travel data, of the traffic scene within the second duration may guide the first machine learning model to output an incorrect prediction label. Consequently, performance of the first machine learning model cannot be accurately indicated. The second duration is greater than the third duration, so that the second half of data in the description data, included in the target travel data, of the traffic scene within the second duration is removed. In this way, an obtained evaluation result can more accurately indicate real performance of the first machine learning model.

In a possible implementation of the first aspect, a type of a task performed by the first machine learning model includes one or more of the following: determining whether to overtake, determining whether to give way, or determining whether to limit a speed. In this implementation, a plurality of types of tasks that can be performed by the first machine learning model are provided, so that an application scenario of the solution is extended, and implementation flexibility of the solution is improved.

According to a second aspect, an embodiment of this application provides a data processing method. The method may be applied to the autonomous driving field of artificial intelligence. The method includes: A third device processes a first training sample by using a second machine learning model, to obtain a second prediction label corresponding to the first training sample. The third device processes a second training sample by using the second machine learning model, to obtain a second prediction label corresponding to the second training sample, where both the second training sample and the first training sample include description data of a traffic scene, and the second training sample and the first training sample correspond to different traffic scenes; and processes the second training sample by using a first machine learning model, to obtain a first prediction label corresponding to the second training sample. The third device updates the second machine learning model based on a first loss term and a second loss term, where the first loss term indicates a similarity between the second prediction label corresponding to the first training sample and a ground-truth corresponding to the first training sample, and the second loss term indicates a similarity between the second prediction label corresponding to the second training sample and the first prediction label corresponding to the second training sample.

In this implementation, because the second training sample and the first training sample correspond to different traffic scenes, the first loss term indicates the similarity between the second prediction label corresponding to the first training sample and the ground-truth corresponding to the first training sample, to help improve performance of the second machine learning model in a traffic scene corresponding to the first training sample. The second loss term indicates the similarity between the second prediction label corresponding to the second training sample and the first prediction label corresponding to the second training sample, to enable the second machine learning model to learn superb performance of the first machine learning model in a traffic scene corresponding to the second training sample. Therefore, when the first machine learning model does not perform well in the traffic scene corresponding to the first training sample, a trained second machine learning model not only has high performance in the traffic scene corresponding to the first training sample, but also has high performance in the traffic scene corresponding to the second training sample. That is, a second machine learning model capable of performing well in all traffic scenes can be obtained.

In a possible implementation of the second aspect, the first training sample is determined based on a second evaluation sample, and the second evaluation sample is an evaluation sample that is obtained during evaluation of the first machine learning model and in which a parameter value of at least one evaluation indicator does not meet a second condition.

In the second aspect of this application, the third device may be further configured to perform the steps performed by the first device in the first aspect and the possible implementations of the first aspect. For specific implementations of the steps, meanings of terms, and beneficial effects achieved in the second aspect, refer to the first aspect. Details are not described herein again.

According to a third aspect, an embodiment of this application provides a machine learning model evaluation apparatus. The apparatus may be used in the autonomous driving field of artificial intelligence. The apparatus includes: an obtaining module, configured to obtain a first evaluation sample, where the first evaluation sample includes description data of a first traffic scene within first duration, the first evaluation sample includes a plurality of pieces of first segmented data, each piece of first segmented data includes description data of the first traffic scene within first sub-duration, and the first duration includes the first sub-duration; a processing module, configured to process the plurality of pieces of first segmented data by using a first machine learning model, to obtain a plurality of first prediction labels that are in a one-to-one correspondence with the plurality of pieces of first segmented data; and a determining module, configured to determine a first parameter value of at least one evaluation indicator based on the plurality of first prediction labels. The at least one evaluation indicator indicates stability of the plurality of first prediction labels generated by the first machine learning model, and/or the at least one evaluation indicator indicates accuracy of the plurality of first prediction labels generated by the first machine learning model in the first traffic scene, where the accuracy of the plurality of first prediction labels is obtained based on the plurality of first prediction labels and ground-truths corresponding to the plurality of pieces of first segmented data.

In the third aspect of this application, the machine learning model evaluation apparatus is further configured to perform the steps performed by the first device in the first aspect and the possible implementations of the first aspect. For specific implementations of the steps, meanings of terms, and beneficial effects achieved in the third aspect, refer to the first aspect. Details are not described herein again.

According to a fourth aspect, an embodiment of this application provides a data processing apparatus. The apparatus may be used in the autonomous driving field of artificial intelligence. The apparatus includes: a processing module, configured to process a first training sample by using a second machine learning model, to obtain a second prediction label corresponding to the first training sample, where the processing module is further configured to process a second training sample by using the second machine learning model, to obtain a second prediction label corresponding to the second training sample, where both the second training sample and the first training sample include description data of a traffic scene, and the second training sample and the first training sample correspond to different traffic scenes; and the processing module is further configured to process the second training sample by using a first machine learning model, to obtain a first prediction label corresponding to the second training sample; and an update module, configured to update the second machine learning model based on a first loss term and a second loss term, where the first loss term indicates a similarity between the second prediction label corresponding to the first training sample and a ground-truth corresponding to the first training sample, and the second loss term indicates a similarity between the second prediction label corresponding to the second training sample and the first prediction label corresponding to the second training sample.

In the fourth aspect of this application, the data processing apparatus is further configured to perform the steps performed by the third device in the second aspect and the possible implementations of the second aspect. For specific implementations of the steps, meanings of terms, and beneficial effects achieved in the fourth aspect, refer to the second aspect. Details are not described herein again.

According to a fifth aspect, this application provides a device. The device may include a memory, a processor, and a bus system. The memory is configured to store a program. The processor is configured to execute the program in the memory, including the following step: The bus system is configured to connect the memory and the processor, to enable the memory and the processor to communicate with each other.

In the fifth aspect of this application, the processor in the device may be further configured to perform the steps performed by the first device in the possible implementations of the first aspect, or may be further configured to perform the steps performed by the third device in the possible implementations of the second aspect. For details, refer to the first aspect and the second aspect. Details are not described herein again.

According to a sixth aspect, this application provides a computer-readable storage medium. The computer-readable storage medium stores a computer program. When the computer program is run on a computer, the computer is enabled to perform the machine learning model evaluation method in the first aspect, or the computer is enabled to perform the data processing method in the second aspect.

According to a seventh aspect, this application provides a circuit system. The circuit system includes a processing circuit. The processing circuit is configured to perform the machine learning model evaluation method in the first aspect, or perform the data processing method in the second aspect.

According to an eighth aspect, this application provides a computer program product. When the computer program product is run on a computer, the computer is enabled to perform the machine learning model evaluation method in the first aspect, or the computer is enabled to perform the data processing method in the second aspect.

According to a ninth aspect, this application provides a chip system. The chip system includes a processor, configured to implement the functions in the foregoing aspects, for example, sending or processing the data and/or the information in the foregoing methods. In a possible design, the chip system further includes a memory. The memory is configured to store program instructions and data that are necessary for a server or a communication device. The chip system may include a chip, or may include a chip and another discrete component.

### BRIEF DESCRIPTION OF DRAWINGS

FIG. 1a is a diagram of a structure of a main framework of artificial intelligence according to an embodiment of this application;
FIG. 1b is a schematic flowchart of a machine learning model evaluation method according to an embodiment of this application;
FIG. 2A and FIG. 2B are another schematic flowchart of a machine learning model evaluation method according to an embodiment of this application;
FIG. 3 is a diagram of obtaining an evaluation sample based on travel data according to an embodiment of this application;
FIG. 4 is another schematic flowchart of a machine learning model evaluation method according to an embodiment of this application;
FIG. 5 is a diagram of obtaining a first training sample set according to an embodiment of this application;
FIG. 6 is a diagram of training a second machine learning model according to an embodiment of this application;
FIG. 7 is a diagram of obtaining a first training sample set and training a second machine learning model by using the first training sample set according to an embodiment of this application;
FIG. 8 is a diagram of a structure of a machine learning model evaluation apparatus according to an embodiment of this application;
FIG. 9 is a diagram of a structure of a data processing apparatus according to an embodiment of this application;
FIG. 10 is a diagram of a structure of a device according to an embodiment of this application; and
FIG. 11 is a diagram of a structure of a chip according to an embodiment of this application.

### DESCRIPTION OF EMBODIMENTS

In this specification, the claims, and the accompanying drawings of this application, the terms "first", "second", and the like are intended to distinguish between similar objects but do not necessarily indicate a specific order or sequence. It should be understood that the terms used in this way are interchangeable in proper circumstances and are merely intended for distinguishing when objects having a same attribute are described in embodiments of this application. In addition, the terms "include", "have", and any variants thereof are intended to cover a non-exclusive inclusion, so that a process, a method, a system, a product, or a device that includes a series of units is not necessarily limited to the units, but may include other units that are not clearly listed or are inherent to the process, the method, the product, or the device.

The following describes embodiments of this application with reference to the accompanying drawings. A person of ordinary skill in the art can know that the technical solutions provided in embodiments of this application are also applicable to similar technical problems with development of technologies and emergence of a new scenario.

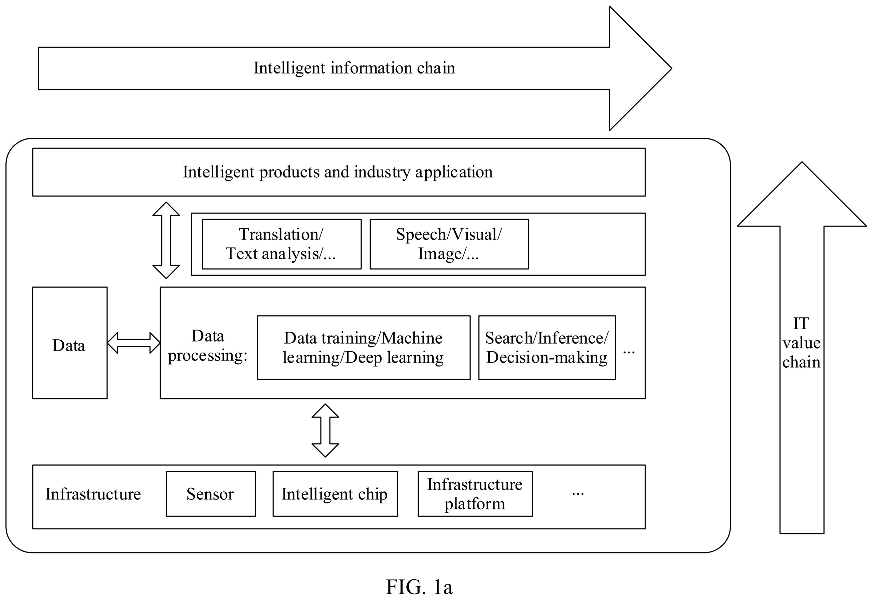

First, an overall operation process of an artificial intelligence system is described. FIG. 1a is a diagram of a structure of a main framework of artificial intelligence. The following describes the main framework of artificial intelligence from two dimensions: "intelligent information chain" (a horizontal axis) and "IT value chain" (a vertical axis). The "intelligent information chain" indicates a process from data obtaining to data processing. For example, the process may be a general process of intelligent information perception, intelligent information representation and formation, intelligent inference, intelligent decision-making, and intelligent execution and output. In this process, data undergoes a refinement process of "data-information-knowledge-intelligence". The "IT value chain" indicates value brought by artificial intelligence to the information technology industry in a process from underlying infrastructure and information (implemented by providing and processing technologies) of artificial intelligence to industrial ecology of a system.

### (1) Infrastructure

The infrastructure provides computing capability support for the artificial intelligence system, implements communication with the outside world, and implements support through an infrastructure platform. The infrastructure communicates with the outside through a sensor. A computing capability is provided by an intelligent chip. The intelligent chip may be specifically a hardware acceleration chip such as a central processing unit (central processing unit, CPU), an embedded neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA). The infrastructure platform includes related platform assurance and support such as a distributed computing framework and a network, and may include cloud storage and computing, an interconnection and interworking network, and the like. For example, the sensor communicates with the outside to obtain data, and the data is provided for an intelligent chip in a distributed computing system provided by the infrastructure platform to perform computing.

### (2) Data

Data at an upper layer of the infrastructure indicates a data source in the artificial intelligence field. The data relates to graphics, images, speech, and text, and further relates to internet of things data of conventional devices, including service data of an existing system and sensory data such as force, displacement, a liquid level, temperature, and humidity.

### (3) Data processing

The data processing usually includes data training, machine learning, deep learning, searching, inference, decision-making, and the like.

The machine learning and the deep learning may be used for performing symbolic and formal intelligent information modeling, extraction, preprocessing, training, and the like on data.

The inference is a process of performing machine thinking and solving problems by simulating an intelligent inference mode of humans in a computer or intelligent system by using formal information and according to an inference control policy. A typical function is searching and matching.

The decision-making is a process of making a decision after intelligent information is inferred, and usually provides classification, ranking, prediction, and other functions.

### (4) General capabilities

After data undergoes the foregoing data processing, some general capabilities may be further formed based on a data processing result. For example, the general capabilities may be an algorithm or a general system, for example, translation, text analysis, computer vision processing, speech recognition, and image recognition.

### (5) Intelligent products and industry application

The intelligent products and the industry application are products and application of the artificial intelligence system in various fields, are obtained by packaging an overall artificial intelligence solution, and implement productization and practical application of intelligent information decision-making. Application fields of the artificial intelligence system include intelligent terminals, intelligent manufacturing, intelligent transportation, smart home, intelligent healthcare, intelligent security protection, autonomous driving, smart city, and the like.

The methods provided in this application may be applied to the autonomous driving field of the artificial intelligence technology, and is used to evaluate performance of a first machine learning model in the autonomous driving field. For example, the first machine learning model is a machine learning model to be deployed on a vehicle. Optionally, the methods may be applied to an intelligent driving decision-making system of a vehicle. In a current manner, joint evaluation is performed, in a simulated environment, on a plurality of machine learning models deployed on a vehicle, and an evaluation status of a specific machine learning model cannot be accurately obtained.

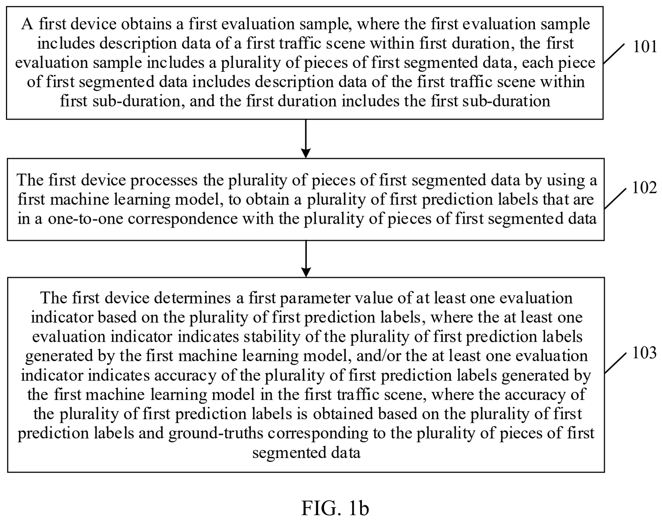

Therefore, this application provides a machine learning model evaluation method, to evaluate a first machine learning model to be deployed on a vehicle. Specifically, FIG. 1b is a schematic flowchart of a machine learning model evaluation method according to an embodiment of this application. 101: A first device obtains a first evaluation sample, where the first evaluation sample includes description data of a first traffic scene within first duration, the first evaluation sample includes a plurality of pieces of first segmented data, each piece of first segmented data includes description data of the first traffic scene within first sub-duration, and the first duration includes the first sub-duration.

For example, the first device is a device for evaluating the first machine learning model, and may be specifically a terminal device or an edge-side device, or may be a cloud device, for example, a server or a server cluster. A product form of the first device is not limited in this application.

For example, the description data may be specifically represented as a video, an image, a scene description file, or another type of data. A specific form of the description data may be determined based on an actual case. This is not limited herein. For example, the scene description file may include a location, a speed, an acceleration, or other status information of each road user in the first traffic scene. This is not limited in this embodiment of this application.

For example, the first traffic scene may be as follows: At an uncontrolled intersection, an ego vehicle travels straight, and another road user turns left; at an intersection, an ego vehicle travels straight, and another road user turns right; at an intersection, an ego vehicle travels straight, and correspondingly, another road user crosses the intersection diagonally; at an uncontrolled intersection, an ego vehicle turns left, and correspondingly, another road user walks straight; an ego vehicle turns left at an intersection; at an intersection, an ego vehicle turns left, and another road user crosses (cross) the intersection; an ego vehicle turns right at an intersection; at an intersection, an ego vehicle turns right, and another road user crosses the intersection; an ego vehicle enters an intersection, and another road user crosses the intersection; an ego vehicle makes a U-turn (U-turn); an ego vehicle crosses an opening of an intersection; an ego vehicle merges in at an opening of an intersection; an ego vehicle encounters another road user when crossing an intersection; an ego vehicle merges when entering a ramp or an auxiliary lane; or an ego vehicle crosses an intersection without interacting with another road user. Specific traffic scenes corresponding to a plurality of evaluation samples included in an evaluation sample set of the first machine learning model may be flexibly determined based on a type of a task performed by the first machine learning model and a specific application scenario. This is not limited in this embodiment of this application.

The first duration may include one or more pieces of first sub-duration. For example, the first duration is 10 seconds, and the first sub-duration is 2 seconds. For another example, the first duration is 20 seconds, and the first sub-duration is 5 seconds. Alternatively, the first duration and the first sub-duration may be other duration. The examples herein are merely intended for ease of understanding a relationship between the "first duration" and the "first sub-duration", but not to limit the solution.

102: The first device processes the plurality of pieces of first segmented data by using the first machine learning model, to obtain a plurality of first prediction labels that are in a one-to-one correspondence with the plurality of pieces of first segmented data.

103: The first device determines a first parameter value of at least one evaluation indicator based on the plurality of first prediction labels, where the at least one evaluation indicator indicates stability of the plurality of first prediction labels generated by the first machine learning model, and/or the at least one evaluation indicator indicates accuracy of the plurality of first prediction labels generated by the first machine learning model in the first traffic scene, where the accuracy of the plurality of first prediction labels is obtained based on the plurality of first prediction labels and ground-truths corresponding to the plurality of pieces of first segmented data.

For example, the at least one evaluation indicator may include a first evaluation indicator and a second evaluation indicator, and the first evaluation indicator indicates the stability of the plurality of first prediction labels generated by the first machine learning model. For example, the first evaluation indicator may represent a quantity of transitions between the plurality of first prediction labels, and a smaller quantity of transitions between the plurality of first prediction labels indicates higher stability of the plurality of first prediction labels. For another example, the first evaluation indicator may represent frequency of transitions between the plurality of first prediction labels, and the frequency of transitions between the plurality of first prediction labels may be a ratio of the quantity of transitions between the plurality of first prediction labels to a total quantity of the plurality of first prediction labels. Lower frequency of transitions between the plurality of first prediction labels indicates higher stability of the plurality of first prediction labels.

The second evaluation indicator indicates the accuracy of the plurality of first prediction labels generated by the first machine learning model in the first traffic scene, where the accuracy of the plurality of first prediction labels is obtained based on the plurality of first prediction labels and the ground-truths corresponding to the plurality of pieces of first segmented data. The "accuracy of the plurality of first prediction labels" may be represented by an accuracy rate of the plurality of first prediction labels. The accuracy rate of the first prediction labels may represent a ratio of a quantity of first prediction labels, among the plurality of first prediction labels, that are consistent with ground-truths to the total quantity of the plurality of first prediction labels.

In this embodiment of this application, an evaluation indicator used in this application is constructed at a granularity of a traffic scene. Because a vehicle traveling process is continuous, "constructing the evaluation indicator at the granularity of a traffic scene" can more accurately indicate performance of a machine learning model applied to the vehicle traveling process. In addition, in the solutions provided in this application, no simulated traffic scene needs to be built, so that consumption of computer resources during evaluation of the machine learning model is reduced.

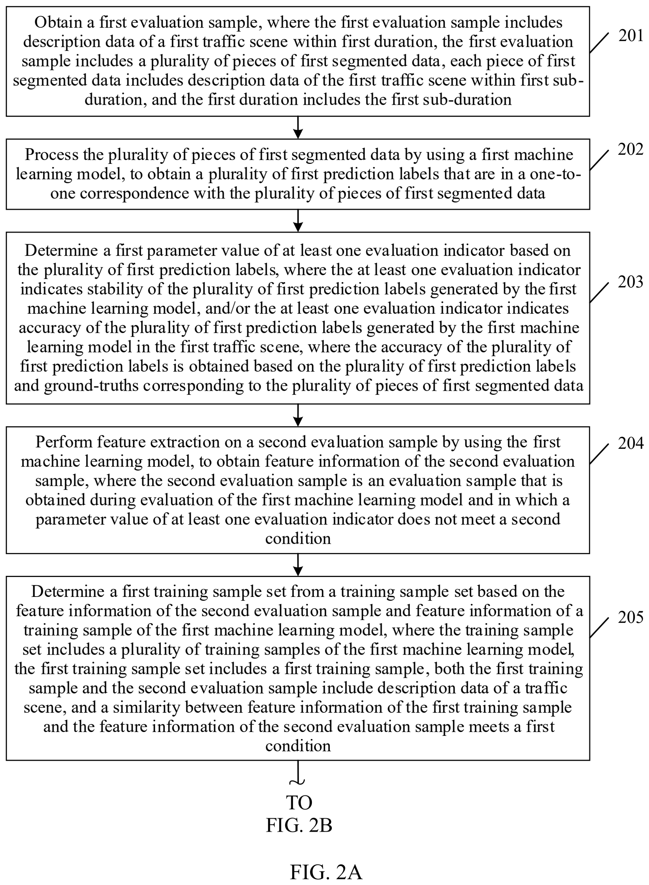

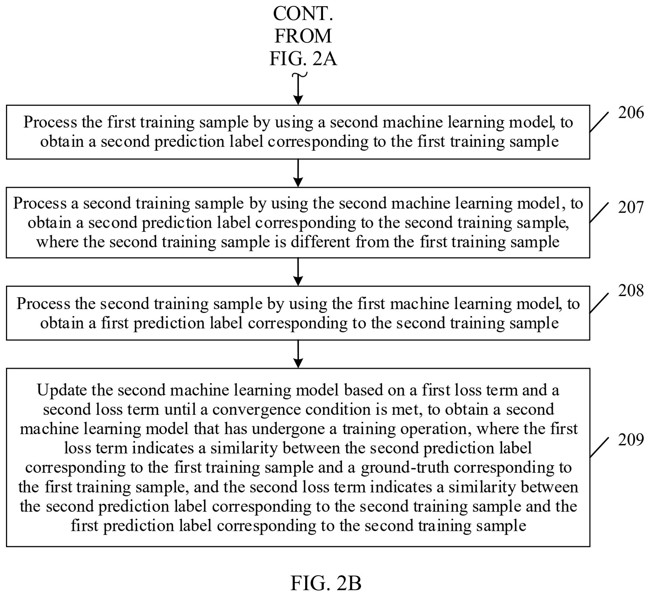

With reference to the foregoing descriptions, the following starts to describe a specific implementation process of the method provided in embodiments of this application. Specifically, FIG. 2A and FIG. 2B are another schematic flowchart of a machine learning model evaluation method according to an embodiment of this application. The machine learning model evaluation method provided in this embodiment of this application may include the following steps.

201: Obtain a first evaluation sample, where the first evaluation sample includes description data of a first traffic scene within first duration, the first evaluation sample includes a plurality of pieces of first segmented data, each piece of first segmented data includes description data of the first traffic scene within first sub-duration, and the first duration includes the first sub-duration.

In this embodiment of this application, step 201 is an optional step. A first device may obtain one or more first evaluation samples from an evaluation sample set of a first machine learning model. The evaluation sample set of the first machine learning model may include a plurality of evaluation samples, and each first evaluation sample may be any one of the plurality of evaluation samples.

The first evaluation sample includes the description data of the first traffic scene within the first duration, the first evaluation sample includes the plurality of pieces of first segmented data, and the first duration may include one or more pieces of first sub-duration. For example, the first duration is 10 seconds, and the first sub-duration is 2 seconds. For another example, the first duration is 20 seconds, and the first sub-duration is 5 seconds. Alternatively, the first duration and the first sub-duration may be other duration. The examples herein are merely intended for ease of understanding a relationship between the "first duration" and the "first sub-duration", but not to limit the solution.

For example, the description data may be specifically represented as a video, an image, a scene description file, or another type of data. A specific form of the description data may be determined based on an actual case. This is not limited herein. For example, the scene description file may include a location, a speed, an acceleration, or other status information of each road user in the first traffic scene. This is not limited in this embodiment of this application.

For example, the first evaluation sample may include a video of the first traffic scene within 15 seconds, the first evaluation sample includes five pieces of first segmented data, each piece of first segmented data includes a video of the first traffic scene within 3 seconds, and the five pieces of first segmented data may constitute the first evaluation sample. For another example, the first evaluation sample may include images of the first traffic scene at a plurality of time points within 16 seconds, the first evaluation sample includes four pieces of first segmented data, each piece of first segmented data includes images of the first traffic scene at a plurality of time points within 4 seconds, and the four pieces of first segmented data may constitute the first evaluation sample. For another example, the first evaluation sample may include scene description files of the first traffic scene at a plurality of time points within 20 seconds, the first evaluation sample includes five pieces of first segmented data, the five pieces of first segmented data each include a scene description file of specific duration, duration of the five pieces of first segmented data is 5 seconds, 6 seconds, 3 seconds, 4 seconds, and 2 seconds, and the five pieces of first segmented data may constitute the first evaluation sample. It should be noted that the examples herein are merely intended for ease of understanding concepts of the "first evaluation sample" and the "first segmented data", but not to limit the solution.

Optionally, a task performed by the first machine learning model may be a classification task. For example, a type of a task performed by the first machine learning model may be any one or more of the following: determining whether to overtake, determining whether to give way, determining whether to limit a speed, or performing another classification task. This is not limited in this embodiment of this application. A plurality of types of tasks that can be performed by the first machine learning model are provided, so that an application scenario of the solution is extended, and implementation flexibility of the solution is improved.

Optionally, an embodiment of this application further discloses a manner of obtaining the evaluation sample set of the first machine learning model. The evaluation sample set of the first machine learning model may include the plurality of evaluation samples, and each of the plurality of evaluation samples is obtained based on one piece of travel data. That is, the plurality of evaluation samples in the first machine learning model may be obtained based on a plurality of pieces of travel data.

In a case, the "travel data" may be road test data, and the road test data includes description data of a traffic scene that is collected when an autonomous vehicle travels on a road. Optionally, the road test data may include description data of a traffic scene that is collected when the autonomous vehicle travels on a real road. The "autonomous vehicle" may be configured to be in a fully or partially autonomous driving mode. For example, when the autonomous vehicle is in the partially autonomous driving mode, while controlling the autonomous vehicle, the autonomous vehicle may further determine, through a manual operation, a current status of the ego vehicle and a surrounding environment, determine a possible behavior of at least one road user in the surrounding environment, determine a confidence level corresponding to a possibility of performing the possible behavior by the another road user, and control the autonomous vehicle based on determined information. When the autonomous vehicle is in the fully autonomous driving mode, the autonomous vehicle may alternatively be configured to operate without interacting with a human. In this embodiment of this application, because the first machine learning model is configured on the vehicle to implement the autonomous driving mode of the vehicle, a behavior of "evaluating performance of the first machine learning model by using the road test data" makes a "process of evaluating the first machine learning model" more similar to an "actual application process of the first machine learning model", so that an obtained evaluation result is more accurate.

In another case, the "travel data" may be description data of a traffic scene that is collected when a vehicle is manually controlled to travel on a road. It should be noted that a meaning of the "description data of the traffic scene" may be understood with reference to the foregoing descriptions of the "traffic scene", the "first evaluation sample", and the "first segmented data". Details are not described herein again.

For ease of description, in this application, any evaluation sample in the evaluation sample set is referred to as a "target evaluation sample". The target evaluation sample may include description data of a target traffic scene within specific duration. The target evaluation sample may include one or more pieces of target segmented data. Each of the one or more pieces of target segmented data may include description data of the target traffic scene within specific sub-duration. The one or more pieces of target segmented data may constitute the target evaluation sample.

For example, the target evaluation sample is obtained based on target travel data (that is, one of the plurality of pieces of travel data). The target travel data may include description data of the target traffic scene within second duration and a raw label corresponding to the description data of the target traffic scene within the second duration. The target evaluation sample includes description data of the target traffic scene within third duration and a ground-truth corresponding to the description data of the target traffic scene within the third duration. The "ground-truth corresponding to the description data of the target traffic scene within the third duration" may also be referred to as an "expected label corresponding to the description data of the target traffic scene within the third duration", and the "ground-truth corresponding to the description data of the target traffic scene within the third duration" may be understood as a ground-truth corresponding to each of the plurality of pieces of target segmented data included in the target evaluation sample, or may be referred to as an expected label corresponding to each of the plurality of pieces of target segmented data included in the target evaluation sample.

A meaning of information indicated by a "raw label corresponding to description data of a traffic scene" is related to the type of the task performed by the first machine learning model. For example, if the task performed by the first machine learning model is determining whether to overtake, the "raw label corresponding to the description data of the traffic scene" may indicate the ego vehicle to overtake or yield in the traffic scene. For another example, if the task performed by the first machine learning model is determining whether to give way, the "raw label corresponding to the description data of the traffic scene" may indicate the ego vehicle to give way or not to give way in the traffic scene. For another example, if the task performed by the first machine learning model is determining whether to limit a speed, the "raw label corresponding to the description data of the traffic scene" may indicate the ego vehicle to limit a speed or not to limit a speed in the traffic scene. A specific meaning of the information indicated by the "raw label" may be determined based on an actual application scenario of the first machine learning model. This is not limited in this embodiment of this application.

For a specific implementation of obtaining the target evaluation sample based on the target travel data, it should be noted that an execution device of "obtaining the target evaluation sample based on the target travel data" and the first device may be a same device. To be specific, the evaluation sample set of the first machine learning model is determined on the first device based on the plurality of pieces of travel data. Alternatively, an execution device of "obtaining the target evaluation sample based on the target travel data" and the first device may be different devices. To be specific, the evaluation sample set of the first machine learning model is determined on another device based on the plurality of pieces of travel data, and then the another device sends the evaluation sample set of the first machine learning model to the first device.

For example, in a case, the "raw label corresponding to the description data of the target traffic scene within the second duration" may be directly determined as the "ground-truth corresponding to the description data of the target traffic scene within the third duration", and the second duration is equal to the third duration. Optionally, when the target travel data is a positive sample, the raw label may be directly determined as the ground-truth, and the second duration is equal to the third duration.

In another case, when the target travel data is a negative sample, the ground-truth in the target evaluation sample is obtained by modifying the raw label in the target travel data. A meaning of a "ground-truth corresponding to description data of a traffic scene" is similar to the meaning of the "raw label corresponding to the description data of the traffic scene". Details are not described herein again. In this embodiment of this application, the target travel sample being a negative sample indicates that an action indicated by the raw label corresponding to the description data of the traffic scene is not suitable for the traffic scene. In this case, the raw label is modified to obtain the ground-truth in the target evaluation sample, to ensure that all actions indicated by ground-truths in the evaluation sample are actions adapting to the traffic scene. This helps improve accuracy of an evaluation result.

For example, if the task performed by the first machine learning model is determining whether to overtake, the "raw label corresponding to the description data of the target traffic scene" in the target travel data indicates the ego vehicle to overtake in the traffic scene. When the target travel data is a negative sample, the "ground-truth corresponding to the description data of the target traffic scene" in the target evaluation sample may indicate the ego vehicle to yield in the traffic scene.

For another example, if the task performed by the first machine learning model is determining whether to change a lane, the "raw label corresponding to the description data of the target traffic scene" in the target travel data indicates the ego vehicle to change a lane in the traffic scene. When the target travel data is a negative sample, the "ground-truth corresponding to the description data of the target traffic scene" in the target evaluation sample may indicate the ego vehicle not to change a lane in the traffic scene.

For another example, if the task performed by the first machine learning model is determining whether to limit a speed, the "raw label corresponding to the description data of the target traffic scene" in the target travel data indicates the ego vehicle not to limit a speed in the traffic scene. When the target travel data is a negative sample, the "ground-truth corresponding to the description data of the target traffic scene" in the target evaluation sample may indicate the ego vehicle to limit a speed in the traffic scene. The examples herein are merely intended for ease of understanding, but not to limit the solution.

For example, each of the plurality of pieces of travel data may have corresponding labeling information, and the labeling information corresponding to each piece of travel data indicates whether the travel data is a positive sample or a negative sample. "The target travel data being a negative sample" may indicate that an action indicated by the raw label in the target travel data is not suitable for being performed in the target traffic scene, and "the target travel data being a positive sample" may indicate that an action indicated by the raw label in the target travel data is suitable for being performed in the target traffic scene.

The "labeling information corresponding to each piece of travel data" may be manually labeled, or the "labeling information corresponding to each piece of travel data" may be generated by a machine learning model that has undergone a training operation.

Optionally, when the target travel data is a negative sample, the second duration is greater than the third duration. To be specific, when the target travel data is a negative sample, the raw label in the target travel data may be modified to obtain the ground-truth in the target evaluation sample, and description data within a first time period that is included in the description data, included in the target travel data, of the target traffic scene within the second duration may be further deleted, to obtain the description data, included in the target evaluation sample, of the target traffic scene within the third duration. The description data within the first time period includes description data within preset duration that is counted from back to front in the second duration. For example, the second duration includes 20 seconds, the first time period may include the last 5 seconds of the 20 seconds, and the third duration may include the first 15 seconds of the 20 seconds. It should be understood that the example herein is merely intended for ease of understanding the solution, but not to limit the solution.

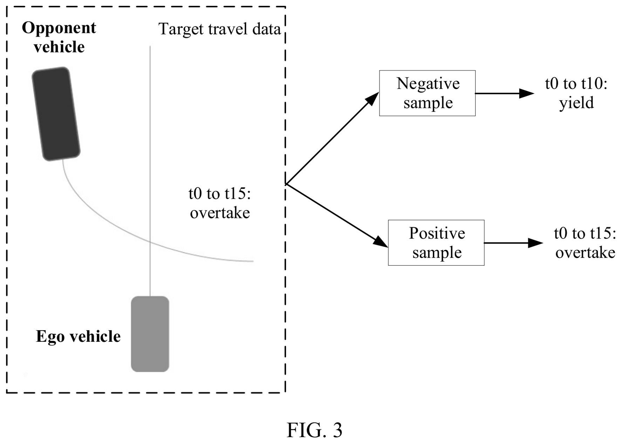

For more intuitive understanding of the solution, refer to FIG. 3. FIG. 3 is a diagram of obtaining an evaluation sample based on travel data according to an embodiment of this application. Herein, for example, the task of the first machine learning model is determining whether the ego vehicle is to overtake. As shown in FIG. 3, the target traffic scene includes the ego vehicle and an opponent vehicle, and the opponent vehicle is another road user that performs gaming with the ego vehicle. The target travel data includes description data of the target traffic scene at t0 to t15, and a raw label corresponding to the description data of the target traffic scene at t0 to t15 is overtake, where t0 to t15 represent 15 time steps. The description data of the target traffic scene at t0 to t15 includes a travel trajectory of the ego vehicle at t0 to t15 and a travel trajectory of the opponent vehicle at t0 to t15. As shown in FIG. 3, there is an intersection point between the travel trajectory of the ego vehicle and the travel trajectory of the opponent vehicle. If the target travel data is a negative sample, the target evaluation sample includes description data of the target traffic scene at t0 to t10 and a ground-truth corresponding to the description data of the target traffic scene at t0 to t10: yield, where t0 to t10 represent the first 10 time steps of the 15 time steps from t0 to t15. If the target travel data is a positive sample, the target evaluation sample may include the description data of the target traffic scene at t0 to t15 and a ground-truth corresponding to the description data of the target traffic scene at t0 to t15: overtake. That is, the target travel data is directly determined as the target evaluation sample. It should be understood that the example in FIG. 3 is merely intended for ease of understanding the solution, but not to limit the solution.

In this embodiment of this application, when the target travel data is a negative sample, a second half of data in the description data, included in the target travel data, of the traffic scene within the second duration may guide the first machine learning model to output an incorrect prediction label. Consequently, performance of the first machine learning model cannot be accurately indicated. The second duration is greater than the third duration, so that the second half of data in the description data, included in the target travel data, of the traffic scene within the second duration is removed. In this way, an obtained evaluation result can more accurately indicate real performance of the first machine learning model.

Optionally, after the type of the task performed by the first machine learning model is determined, at least one dimension related to the type of the task performed by the first machine learning model may be further determined, and at least one traffic scene related to the type of the task performed by the first machine learning model is determined based on the at least one dimension. For example, the at least one dimension may include a road type, a type of a behavior of the ego vehicle, a type of a behavior of another road user in a gaming relationship with the ego vehicle, a type of a decision of the ego vehicle, or another dimension. Examples are not exhaustively listed herein. The road type may include an uncontrolled intersection, an opening, a ramp, or another road type. The type of the behavior of the ego vehicle may include traveling straight, turning left, turning right, or another behavior type. The type of the behavior of the another road user in the gaming relationship with the ego vehicle may include cut-in (cut in), merge-in (merge in), crossing (cross), or another behavior type. The type of the decision of the ego vehicle is related to the type of the task performed by the first machine learning model. If the type of the task performed by the first machine learning model is determining whether to overtake, the type of the decision of the ego vehicle may include overtaking or yielding. If the type of the task performed by the first machine learning model is determining whether to give way, the type of the decision of the ego vehicle may include giving way and not giving way. If the type of the task performed by the first machine learning model is determining whether to limit a speed, the type of the decision of the ego vehicle may include limiting a speed or not limiting a speed. It should be noted that the examples herein are merely intended for ease of understanding of the solution, but not to limit the solution.

The evaluation sample set of the first machine learning model includes a plurality of evaluation samples corresponding to each of the at least one traffic scene, and a difference between quantities of evaluation samples corresponding to the traffic scenes may be within a preset range. Each evaluation sample in the evaluation sample set of the first machine learning model includes description data of a traffic scene within specific duration and a ground-truth corresponding to the description data. In this case, that "a target evaluation sample corresponds to a traffic scene" may be understood as that the target evaluation sample includes description data of the traffic scene.

For example, the "at least one traffic scene" determined based on the "at least one dimension" may include any one or more of the following traffic scenes: At an uncontrolled intersection, an ego vehicle travels straight, and another road user turns left; at an intersection, an ego vehicle travels straight, and another road user turns right; at an intersection, an ego vehicle travels straight, and correspondingly, another road user crosses the intersection diagonally; at an uncontrolled intersection, an ego vehicle turns left, and correspondingly, another road user walks straight; an ego vehicle turns left at an intersection; at an intersection, an ego vehicle turns left, and another road user crosses (cross) the intersection; an ego vehicle turns right at an intersection; at an intersection, an ego vehicle turns right, and another road user crosses the intersection; an ego vehicle enters an intersection, and another road user crosses the intersection; an ego vehicle makes a U-turn (U-turn); an ego vehicle crosses an opening of an intersection; an ego vehicle merges in at an opening of an intersection; an ego vehicle encounters another road user when crossing an intersection; an ego vehicle merges when entering a ramp or an auxiliary lane; or an ego vehicle crosses an intersection without interacting with another road user. Specific traffic scenes corresponding to a plurality of evaluation samples included in an evaluation sample set of the first machine learning model may be flexibly determined based on a type of a task performed by the first machine learning model and a specific application scenario. This is not limited in this embodiment of this application.

202: Process the plurality of pieces of first segmented data by using the first machine learning model, to obtain a plurality of first prediction labels that are in a one-to-one correspondence with the plurality of pieces of first segmented data.

In this embodiment of this application, step 202 is an optional step. The first device may input a plurality of pieces of first segmented data included in each first evaluation sample to the first machine learning model, and process, by using the first machine learning model, the plurality of pieces of first segmented data included in each first evaluation sample, to obtain a plurality of first prediction labels that are output by the first machine learning model and that are in a one-to-one correspondence with the plurality of pieces of first segmented data.

A meaning of information indicated by the "first prediction label" is related to the type of the task performed by the first machine learning model. A meaning of the "first prediction label" is similar to the meaning of the "raw label". Refer to the foregoing descriptions. Details are not described herein again.

203: Determine a first parameter value of at least one evaluation indicator based on the plurality of first prediction labels, where the at least one evaluation indicator indicates stability of the plurality of first prediction labels generated by the first machine learning model, and/or the at least one evaluation indicator indicates accuracy of the plurality of first prediction labels generated by the first machine learning model in the first traffic scene, where the accuracy of the plurality of first prediction labels is obtained based on the plurality of first prediction labels and ground-truths corresponding to the plurality of pieces of first segmented data.

In this embodiment of this application, step 203 is an optional step. The first device may determine, based on the plurality of first prediction labels that are in a one-to-one correspondence with the plurality of pieces of first segmented data included in each first evaluation sample, a first parameter value of at least one evaluation indicator corresponding to the first evaluation sample.

The at least one evaluation indicator may include a first evaluation indicator and a second evaluation indicator, and the first evaluation indicator indicates stability of the at least one evaluation indicator generated by the first machine learning model.

For example, the first evaluation indicator may represent a quantity of transitions between the plurality of first prediction labels, and a smaller quantity of transitions between the plurality of first prediction labels indicates higher stability of the plurality of first prediction labels. For example, the plurality of first prediction labels include five first prediction labels that are in a one-to-one correspondence with five pieces of first segmented data included in the first evaluation sample, the task performed by the first machine learning model is determining whether to overtake, the five first prediction labels are sequentially overtake, overtake, yield, overtake, and overtake, and a quantity of transitions between the five first prediction labels is 2.

For another example, the first evaluation indicator may represent frequency of transitions between the plurality of first prediction labels, and the frequency of transitions between the plurality of first prediction labels may be a ratio of a quantity of transitions between the plurality of first prediction labels to a total quantity of the plurality of first prediction labels. Lower frequency of transitions between the plurality of first prediction labels indicates higher stability of the plurality of first prediction labels. For example, the plurality of first prediction labels include five first prediction labels that are in a one-to-one correspondence with five pieces of first segmented data included in the first evaluation sample, the task performed by the first machine learning model is determining whether to overtake, the five first prediction labels are sequentially overtake, overtake, yield, overtake, and overtake, and frequency of transitions between the five first prediction labels may be 2/5 or the like. It should be noted that the foregoing examples of the "first evaluation indicator" are merely intended for ease of understanding the solution, but not to limit the solution.

The second evaluation indicator indicates the accuracy of the plurality of first prediction labels generated by the first machine learning model in the first traffic scene, where the accuracy of the plurality of first prediction labels is obtained based on the plurality of first prediction labels and the ground-truths corresponding to the plurality of pieces of first segmented data. A plurality of ground-truths that are in a one-to-one correspondence with the plurality of pieces of first segmented data included in the first evaluation sample may be the same. For example, if a ground-truth corresponding to a first evaluation sample is overtake, a ground-truth corresponding to each of a plurality of pieces of first segmented data included in the first evaluation sample is overtake.

The "accuracy of the plurality of first prediction labels" may be represented by an accuracy rate of the plurality of first prediction labels. The accuracy rate of the plurality of first prediction labels may represent a ratio of a quantity of first prediction labels, among the plurality of first prediction labels, that are consistent with ground-truths to the total quantity of the plurality of first prediction labels.

For example, the plurality of first prediction labels include five first prediction labels that are in a one-to-one correspondence with five pieces of first segmented data included in the first evaluation sample, the task performed by the first machine learning model is determining whether to overtake, all of five ground-truths that are in a one-to-one correspondence with the five pieces of first segmented data included in the first evaluation sample are overtake, the five first prediction labels are sequentially overtake, overtake, yield, overtake, and overtake, and an accuracy rate of the five first prediction labels may be 4/5, namely, 80%. It should be understood that the examples herein are merely intended to testify implementability of the solution, but not to limit the solution.

Optionally, the at least one evaluation indicator may further indicate safety of the plurality of first prediction labels generated by the first machine learning model. Optionally, the "safety of the plurality of first prediction labels" may be a distance between the ego vehicle and another road user. For example, after the plurality of first prediction labels that are in a one-to-one correspondence with the plurality of pieces of first segmented data are obtained, for ease of description, any one of the plurality of pieces of first segmented data is subsequently referred to as target segmented data. The first device may derive a trajectory of the ego vehicle based on the target segmented data and a target prediction label corresponding to the target segmented data, to obtain a first minimum distance between the vehicle and another road user in the target segmented data. The first device performs the foregoing operation on each of the plurality of pieces of first segmented data, to obtain a plurality of first minimum distances that are in a one-to-one correspondence with the plurality of pieces of first segmented data. The first device may use a smallest one of the plurality of first minimum distances as a final distance corresponding to the plurality of first prediction labels, and then evaluate, based on the final distance, the safety of the plurality of first prediction labels generated by the first machine learning model, to be specific, evaluate whether the plurality of first prediction labels generated by the first machine learning model are safe.

Optionally, the first parameter value of the at least one evaluation indicator failing to meet a second condition may indicate that the first machine learning model fails evaluation in the first traffic scene. A condition for determining that the first machine learning model fails evaluation in a specific traffic scene is specified, so that implementation difficulty of the solution is reduced.

For example, after determining a first parameter value of at least one evaluation indicator corresponding to each first evaluation sample, the first device may determine whether the first parameter value of the at least one evaluation indicator corresponding to the first evaluation sample meets the second condition. The first device may perform the foregoing operation on each evaluation sample in the evaluation sample set of the first machine learning model. If a parameter value of at least one evaluation indicator corresponding to each evaluation sample in the evaluation sample set of the first machine learning model meets the second condition, it can be determined that the first machine learning model succeeds in the evaluation. If a parameter value of at least one evaluation indicator corresponding to any evaluation sample in the evaluation sample set of the first machine learning model does not meet the second condition, it can be considered that the first machine learning model fails the evaluation.

Optionally, when the stability of the plurality of first prediction labels generated by the first machine learning model does not meet a first subcondition and/or when the accuracy of the plurality of first prediction labels does not meet a second subcondition, it is considered that the parameter value of the at least one evaluation indicator does not meet the second condition; and/or when the safety of the plurality of first prediction labels does not meet a third subcondition, it is considered that the parameter value of the at least one evaluation indicator does not meet the second condition.

For example, when the quantity of transitions between the plurality of first prediction labels is greater than or equal to a preset quantity of times, it can be considered that the stability of the plurality of first prediction labels does not meet the first subcondition. For example, the preset quantity of times may be 2, 3, 4, or another value. Alternatively, when the frequency of transitions between the plurality of first prediction labels is greater than or equal to a preset value, it can be considered that the stability of the plurality of first prediction labels does not meet the first subcondition.

When the accuracy rate of the plurality of first prediction labels is less than or equal to a preset accuracy rate, it can be considered that the accuracy of the plurality of first prediction labels does not meet the second subcondition. For example, the preset accuracy rate may be 90%, 80%, or another value. The examples herein are merely intended for ease of understanding the solution, but not to limit the solution.

When the final distance corresponding to the plurality of first prediction labels is less than or equal to a distance threshold, it can be considered that the safety of the plurality of first prediction labels does not meet the third subcondition. In an implementation, the distance threshold may include one distance threshold. For example, the distance threshold may be 1 meter, 1.2 meters, or another value. In another implementation, the distance threshold may include a plurality of distance values that are in a one-to-one correspondence with a plurality of speed ranges. To be specific, when a current speed of the ego vehicle belongs to a first speed range of the plurality of speed ranges, a first distance value corresponding to the first speed range may be obtained; or when a current speed of the ego vehicle belongs to a second speed range of the plurality of speed ranges, a second distance value corresponding to the first speed range may be obtained. A specific distance value may be designed based on an actual case. This is not limited in this embodiment of this application.

Optionally, after evaluating the first machine learning model by using each evaluation sample in the evaluation sample set, the first device may determine that a parameter value of at least one evaluation indicator corresponding to each of at least one second evaluation sample does not meet the second condition, and then may obtain a type of a traffic scene corresponding to each second evaluation sample, to be specific, determine traffic scenes in which the first machine learning model fails evaluation.

It should be noted that the "second evaluation sample" and the "first evaluation sample" have similar meanings, and both are evaluation samples in an evaluation sample set of the first machine learning model. A difference lies in: The "first evaluation sample" is any evaluation sample used to evaluate the first machine learning model. However, a parameter value, obtained by evaluating the first machine learning model by using the "second evaluation sample", of the at least one evaluation indicator does not meet the second condition.

In this embodiment of this application, a solution for evaluating a single machine learning model is provided, to accurately obtain an evaluation result of a single machine learning model. In addition, an evaluation indicator used in this application is constructed at a granularity of a traffic scene. Because a vehicle traveling process is continuous, "constructing the evaluation indicator at the granularity of a traffic scene" can more accurately indicate performance of a machine learning model applied to the vehicle traveling process. In addition, in the solutions provided in this application, no simulated traffic scene needs to be built, so that consumption of computer resources during evaluation of the machine learning model is reduced.

Optionally, the first device may further perform a training operation on the first machine learning model based on the at least one second evaluation sample in subsequent steps. A detailed implementation is described in the subsequent steps.

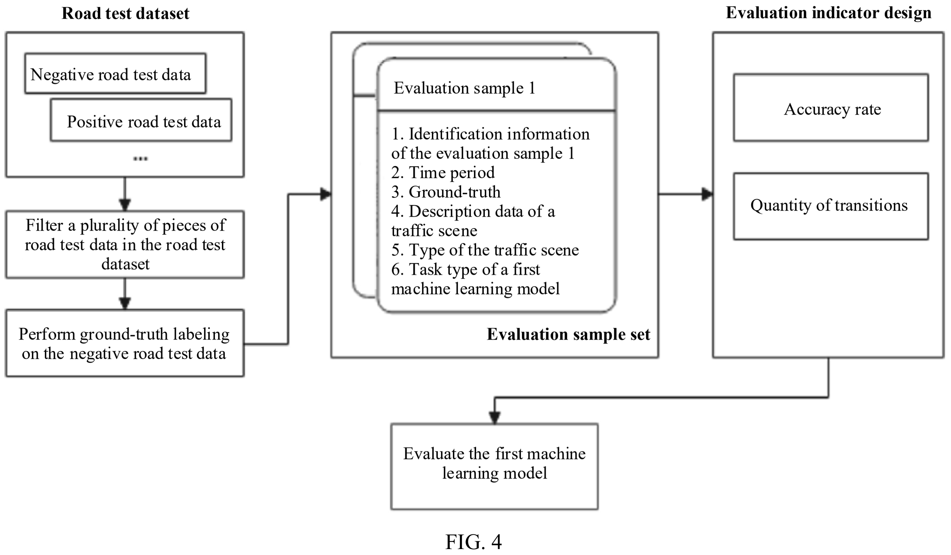

For more intuitive understanding of the solution, refer to FIG. 4. FIG. 4 is another schematic flowchart of a machine learning model evaluation method according to an embodiment of this application. FIG. 4 shows an example in which all evaluation samples of the first machine learning model are road test data. As shown in FIG. 4, a road test dataset includes a plurality of pieces of road test data, and the plurality of pieces of road test data include negative road test data and positive road test data. After the type of the task performed by the first machine learning model is determined, at least one traffic scene corresponding to the type of the task may be determined, and the plurality of pieces of road test data in the road test dataset are filtered based on the at least one traffic scene, to obtain a plurality of pieces of road test data for constructing the evaluation sample set.

Ground-truth labeling may be performed on each piece of negative road test data among a plurality of pieces of selected road test data. To be specific, a raw label in each piece of negative road test data is modified to obtain a ground-truth in an evaluation sample. As shown in FIG. 4, each evaluation sample may include the following information: identification information of the evaluation sample, a time period corresponding to the evaluation sample, a ground-truth included in the evaluation sample, description data of a traffic scene that is included in the evaluation sample, a type of the traffic scene, the type of the task performed by the first machine learning model, and the like.

In FIG. 4, the at least one indicator used for evaluating the first machine learning model includes an accuracy rate of a plurality of first prediction labels corresponding to the evaluation sample, and a quantity of transitions that is obtained based on the plurality of first prediction labels corresponding to the evaluation sample.

After two evaluation indicators and the evaluation sample set are determined, the first machine learning model may be evaluated, to generate parameter values of two evaluation indicators corresponding to each evaluation sample. It should be noted that, for a detailed implementation of steps in FIG. 4, reference may be made to the descriptions in the foregoing steps. Details are not described herein again. The example in FIG. 4 is merely intended for ease of understanding the solution, but not to limit the solution.

204: Perform feature extraction on the second evaluation sample by using the first machine learning model, to obtain feature information of the second evaluation sample, where the second evaluation sample is an evaluation sample that is obtained during evaluation of the first machine learning model and in which a parameter value of at least one evaluation indicator does not meet the second condition.

In this embodiment of this application, step 204 is an optional step. After obtaining one or more second evaluation samples through steps 201 to 203, a second device may input each of at least one piece of segmented data included in each second evaluation sample to the first machine learning model, and perform, by using the first machine learning model, feature extraction on each piece of segmented data included in each second evaluation sample, to obtain feature information of each second evaluation sample. For example, the feature information of each second evaluation sample may include feature information of each of the at least one piece of segmented data included in each second evaluation sample.

It should be noted that the "second device" and the "first device" may be a same device or different devices. This may be specifically determined flexibly based on an actual case. This is not limited in this embodiment of this application.

205: Determine a first training sample set from a training sample set based on the feature information of the second evaluation sample and feature information of a training sample of the first machine learning model, where the training sample set includes a plurality of training samples of the first machine learning model, the first training sample set includes a first training sample, both the first training sample and the second evaluation sample include description data of a traffic scene, and a similarity between feature information of the first training sample and the feature information of the second evaluation sample meets a first condition.

In this embodiment of this application, step 205 is an optional step. The second device may further obtain the training sample set of the first machine learning model, and the training sample set includes the plurality of training samples of the first machine learning model. For example, each training sample may include description data of a traffic scene within specific sub-duration. A meaning of the "training sample" is similar to the meaning of the "segmented data". For understanding, refer to the foregoing descriptions. Details are not described herein again. The second device inputs each training sample in the training sample set of the first machine learning model to the first machine learning model, and performs feature extraction on each training sample by using the first machine learning model, to obtain feature information of each training sample.

The second device may determine the first training sample set from the training sample set based on the feature information of each second evaluation sample and the feature information of each training sample of the first machine learning model. The first training sample set includes a plurality of first training samples, and a similarity between feature information of each first training sample and feature information of one of the at least one second evaluation sample meets the first condition. For example, the first condition may be that a similarity between feature information of a training sample and feature information of one of the at least one second evaluation sample is greater than or equal to a similarity threshold.

For further understanding of the solution, a specific implementation process of determining one or more first training samples from the training sample set of the first machine learning model based on feature information of any second evaluation sample is described herein. For example, in an implementation, after obtaining feature information of any second evaluation sample (for ease of differentiation, the any second evaluation sample is subsequently referred to as a third evaluation sample), the second device obtains feature information of each piece of segmented data included in the third evaluation sample. The second device may generate a first similarity between feature information of a target training sample and the feature information of each piece of segmented data in the third evaluation sample, to obtain at least one first similarity that is in a one-to-one correspondence with at least one piece of segmented data included in the third evaluation sample, where the target training sample is any training sample in the training sample set of the first machine learning model.

For example, the "first similarity" may be obtained by calculating a cosine similarity between the feature information of the target training sample and the feature information of each piece of segmented data in the third evaluation sample, or the "cosine similarity" may be replaced with a Euclidean distance, an L1 distance, an L2 distance, or another similarity calculation manner. The examples herein are merely intended for ease of understanding the solution, but not to limit the solution.

The second device may determine, based on the at least one first similarity that is in a one-to-one correspondence with the at least one piece of segmented data included in the third evaluation sample, whether a similarity between the feature information of the target training sample and feature information of the third evaluation sample meets the first condition; and if a determining result is yes, determine the target training sample as the first training sample; or if a determining result is no, determine that the target training sample is not the first training sample.

For example, in a case, the second device may average the at least one first similarity to obtain an average value; determine whether the average value is greater than or equal to a first similarity threshold; and if a determining result is yes, determine the target training sample as the first training sample; or if a determining result is no, determine that the target training sample is not the first training sample.

In another case, the second device may obtain a median of the at least one first similarity; determine whether the median is greater than or equal to a second similarity threshold; and if a determining result is yes, determine the target training sample as the first training sample; or if a determining result is no, determine that the target training sample is not the first training sample. Alternatively, the second device may implement, in another manner, "determining, based on the at least one first similarity, whether to determine the target training sample as the first training sample". The examples herein are merely intended to testify implementability of the solution, but not to limit the solution.

The second device may perform the foregoing operations on each training sample in the training sample set of the first machine learning model, to determine whether a similarity between feature information of each training sample and the feature information of the third evaluation sample meets the first condition, to select at least one first training sample from the training sample set of the first machine learning model based on the feature information of the third evaluation sample.

The second device may repeatedly perform the foregoing operations on each of the at least one second evaluation sample, to select, based on each of the at least one second evaluation sample, at least one first training sample from the training sample set of the first machine learning model, that is, obtain all first training samples in the first training sample set.

In an implementation, after obtaining feature information of a third evaluation sample, the second device obtains feature information of each piece of segmented data included in the third evaluation sample. The second device may cluster feature information of at least one piece of segmented data included in the third evaluation sample, to obtain a category center corresponding to the feature information of the third evaluation sample.

The second device may generate a second similarity between the feature information of the target training sample and the category center. A "second similarity between feature information of a target training sample and the category center" is considered as a similarity between the feature information of the target training sample and the feature information of the third evaluation sample. For example, the "second similarity" may be obtained by calculating a cosine similarity between the feature information of the target training sample and the category center, or the "cosine similarity" may be replaced with a Euclidean distance, an L1 distance, an L2 distance, or another similarity calculation manner. The examples herein are merely intended for ease of understanding the solution, but not to limit the solution.

The second device may determine whether the second similarity between the feature information of the target training sample and the category center meets the first condition; and if a determining result is yes, determine the target training sample as the first training sample; or if a determining result is no, determine that the target training sample is not the first training sample. For example, the second device may determine whether the second similarity between the feature information of the target training sample and the category center is greater than or equal to a third similarity threshold; and if a determining result is yes, determine that the first condition is met; or if a determining result is no, determine that the first condition is not met.

The second device may perform the foregoing operations on each training sample in the training sample set of the first machine learning model, to determine whether a similarity between feature information of each training sample and the feature information of the third evaluation sample meets the first condition, to select at least one first training sample from the training sample set of the first machine learning model based on the feature information of the third evaluation sample.

The second device may repeatedly perform the foregoing operations on each of the at least one second evaluation sample, to select, based on each of the at least one second evaluation sample, at least one first training sample from the training sample set of the first machine learning model, that is, obtain all first training samples in the first training sample set.

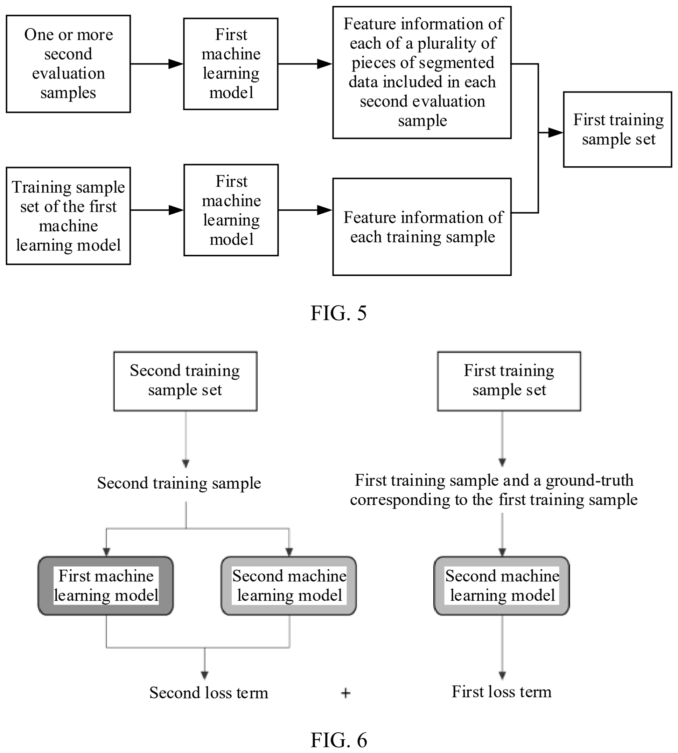

For more intuitive understanding of the solution, refer to FIG. 5. FIG. 5 is a diagram of obtaining a first training sample set according to an embodiment of this application. As shown in FIG. 5, after one or more second evaluation samples are obtained, feature information of each of a plurality of pieces of segmented data included in each second evaluation sample may be obtained by using the first machine learning model. After the training sample set of the first machine learning model is obtained, feature information of each training sample in the training sample set may be obtained by using the first machine learning model. Then similarity matching is performed in a feature information dimension based on the feature information of each of the plurality of pieces of segmented data included in each second evaluation sample and the feature information of each training sample, to obtain the first training sample set from the training sample set of the first machine learning model. For a specific implementation of the foregoing steps, refer to the foregoing descriptions. Details are not described herein again. It should be understood that the example in FIG. 5 is merely intended for ease of understanding the solution, but not to limit the solution.

If training samples are manually classified based on different traffic scenes, which are not necessarily consistent with different traffic scenes understood by a machine learning model. In this embodiment of this application, a plurality of first training samples are obtained from the training sample set based on a similarity between feature information of each second evaluation sample and feature information of each training sample. To be specific, the plurality of obtained first training samples are samples that the first machine learning model considers similar to the second evaluation sample. In this way, a training sample that the first machine learning model is not good at processing can be found from a perspective of the machine learning model, to increase a probability that each first training sample is a training sample that the first machine learning model is not good at processing. This helps improve prediction accuracy of the second machine learning model when processing the first training sample, and helps obtain a second machine learning model with higher performance.

It should be noted that steps 204 and 205 are optional steps. If steps 204 and 205 are not performed, after obtaining the at least one second evaluation sample, the second device may further determine a specific traffic scene to which description data included in each second evaluation sample belongs, to determine at least one traffic scene corresponding to the at least one second prediction sample, in other words, determine all traffic scenes related to the at least one second prediction sample; and therefore determine, as the first training sample set, all training samples in the training sample set of the first machine learning model that correspond to the at least one traffic scene.

206: Process the first training sample by using the second machine learning model, to obtain a second prediction label corresponding to the first training sample.

In this embodiment of this application, step 206 is an optional step. After obtaining the first training sample set, a third device may obtain one or more first training samples from the first training sample set, input each first training sample to the second machine learning model, and process each first training sample by using the second machine learning model, to obtain a second prediction label corresponding to each first training sample.

For example, a type of a task performed by the "second machine learning model" is the same as a type of a task performed by the "first machine learning model". A difference lies in that the first machine learning model is a machine learning model that has undergone a training operation and the second machine learning model has not undergone a training operation. A meaning of the "second prediction label" is similar to the meaning of the "first prediction label". Refer to the descriptions in the foregoing steps. Details are not described herein again.

It should be noted that the "third device", the "second device", and the "first device" may be a same device; or the "third device", the "second device", and the "first device" may be different devices; or any two of the "third device", the "second device", and the "first device" are a same device, and a remaining device is an independent device. This may be specifically determined based on an actual case. This is not limited in this embodiment of this application.

207: Process a second training sample by using the second machine learning model, to obtain a second prediction label corresponding to the second training sample, where the second training sample is different from the first training sample.

In this embodiment of this application, step 207 is an optional step. The third device may further obtain a second training sample set. For example, the second training sample included in the second training sample set and the first training sample included in the first training sample set may be different training samples in the training sample set of the first machine learning model.

The third device may obtain one or more second training samples from the second training sample set, input each second training sample to the second machine learning model, and process each second training sample by using the second machine learning model, to obtain a second prediction label corresponding to each second training sample.

It should be noted that, because steps 201 to 205 are optional steps, if steps 201 to 205 are performed, the first training sample set may be obtained through steps 201 to 205, and then the second training sample set is determined based on the first training sample set. If steps 201 to 205 are not performed, the training sample set of the first machine learning model may alternatively be divided into the first training sample set and the second training sample set in another manner. For example, in a process of deploying the first machine learning model on an autonomous vehicle to perform inference by using the first machine learning model, traffic scenes in which the first machine learning model performs well may be determined. In this case, all traffic scenes corresponding to training samples in the second training sample set may be traffic scenes in which the first machine learning model performs well. Then all training samples in the training sample set of the first machine learning model other than the second training sample set are determined as the first training sample set. It should be noted that the first training sample set and the second training sample set may alternatively be determined in another manner. The example herein is merely intended to testify implementability of the solution, but not to limit the solution.

208: Process the second training sample by using the first machine learning model, to obtain a first prediction label corresponding to the second training sample.

In this embodiment of this application, step 208 is an optional step. The third device may further input each second training sample to the first machine learning model, and process each second training sample by using the first machine learning model, to obtain a first prediction label corresponding to each second training sample.

209: Update the second machine learning model based on a first loss term and a second loss term until a convergence condition is met, to obtain a second machine learning model that has undergone a training operation, where the first loss term indicates a similarity between the second prediction label corresponding to the first training sample and a ground-truth corresponding to the first training sample, and the second loss term indicates a similarity between the second prediction label corresponding to the second training sample and the first prediction label corresponding to the second training sample.

In this embodiment of this application, step 209 is an optional step. It should be noted that, although all of steps 201 to 209 are optional steps, when steps 201 to 203 are not performed, steps 206 to 209 may be required steps; and when steps 206 to 209 are not performed, steps 201 to 203 are required steps. After obtaining the second prediction label corresponding to the first training sample, the second prediction label corresponding to the second training sample, and the first prediction label corresponding to the second training sample, the third device may generate a value of the first loss term based on the second prediction label corresponding to the first training sample and the ground-truth corresponding to the first training sample, where an objective of performing training by using the first loss term includes increasing the similarity between the second prediction label corresponding to the first training sample and the ground-truth corresponding to the first training sample; and generate a value of the second loss term based on the second prediction label corresponding to the second training sample and the first prediction label corresponding to the second training sample, where an objective of performing training by using the second loss term includes increasing the similarity between the second prediction label corresponding to the second training sample and the first prediction label corresponding to the second training sample. The third device may generate a function value of a loss function based on the value of the first loss term and the value of the second loss term. For example, weighted summation may be performed on the value of the first loss term and the value of the second loss term, to obtain the function value of the loss function.

For example, the first loss term may be a cross-entropy loss function, a 0-1 loss function, an L1 loss function, or a loss function of another type, and the second loss term may also be a cross-entropy loss function, a 0-1 loss function, an L1 loss function, or a loss function of another type. It should be noted that the examples herein are merely intended to testify implementability of the solution, but not to limit the solution.

A meaning of the "ground-truth corresponding to the first training sample" is similar to the meaning of the "ground-truth corresponding to the segmented data". For understanding, refer to the descriptions in the foregoing steps. Details are not described herein again.

The third device may calculate a gradient of the function value of the loss function, and update a parameter of the second machine learning model by using a back propagation algorithm, to train the second machine learning model. The third device may repeatedly perform steps 206 to 209, to implement iterative training on the second machine learning model until the convergence condition is met, to obtain a second machine learning model that has undergone a training operation.

For example, the convergence condition may be that a convergence condition of the loss function is met, or a quantity of times of training the second machine learning model reaches a preset quantity of times.

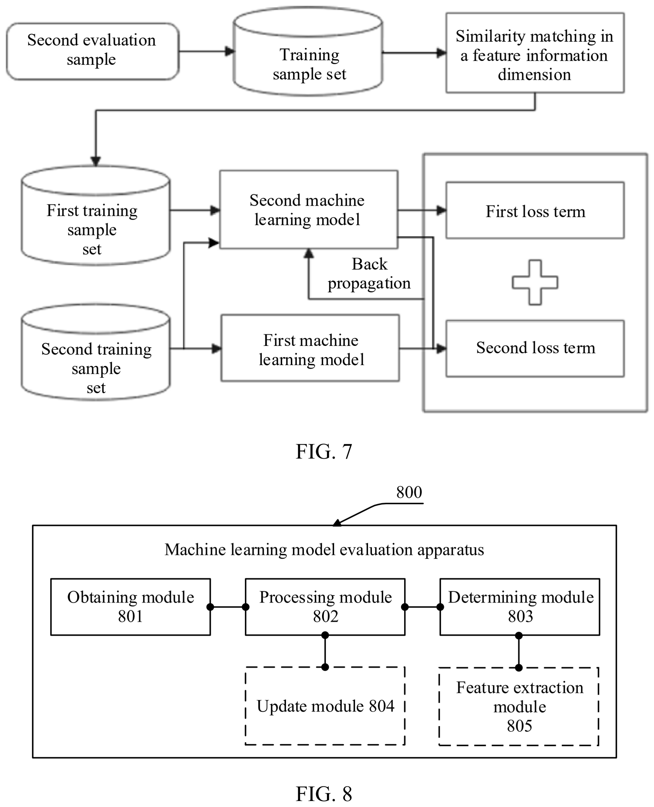

For more intuitive understanding of the solution, refer to FIG. 6 and FIG. 7. FIG. 6 is a diagram of training a second machine learning model according to an embodiment of this application. As shown in FIG. 6, after the first training sample set and the second training sample set are obtained, the first training sample and the ground-truth corresponding to the first training sample may be obtained, the first training sample is input to the second machine learning model, the second prediction label corresponding to the first training sample is generated by the second machine learning model, and then the value of the first loss term is generated based on the second prediction label corresponding to the first training sample and the ground-truth corresponding to the first training sample.

The second training sample is input to the first machine learning model and the second machine learning model, the first prediction label corresponding to the second training sample is generated by the first machine learning model, the second prediction label corresponding to the second training sample is generated by the second machine learning model, and the value of the second loss term is generated based on the second prediction label corresponding to the second training sample and the first prediction label corresponding to the second training sample.

The value of the first loss term and the value of the second loss term are added up to obtain the function value of the loss function, and the second machine learning model is trained based on the function value of the loss function. It should be understood that the example in FIG. 6 is merely intended for ease of understanding the solution, but not to limit the solution.

FIG. 7 is a diagram of obtaining a first training sample set and training a second machine learning model by using the first training sample set according to an embodiment of this application. As shown in FIG. 7, similarity matching in a feature information dimension may be first implemented based on each second evaluation sample and the training sample set of the first machine learning model, to obtain the first training sample set. For a specific implementation process of the foregoing step, refer to the descriptions in steps 204 and 205. Details are not described herein again.

Then the first training sample in the first training sample set is input to the second machine learning model, to generate the value of the first loss term; the second training sample in the second training sample set is input to the first machine learning model and the second machine learning model, to generate the value of the second loss term; the value of the first loss term and the value of the second loss term are added up to obtain the function value of the loss function; and the parameter of the second machine learning model is updated based on the back propagation algorithm, to train the second machine learning model. For specific implementation processes of the foregoing steps, refer to the descriptions in steps 206 to 209. Details are not described herein. It should be understood that the example in FIG. 7 is merely intended for ease of understanding the solution, but not to limit the solution.

In this embodiment of this application, the similarity between the first training sample and the second evaluation sample meets the first condition, and the parameter value, obtained by evaluating the first machine learning model by using the second evaluation sample, of the at least one evaluation indicator does not meet the second condition, that is, when the first machine learning model is evaluated by using the second evaluation sample, performance of the first machine learning model is poor. Therefore, the first loss term indicates the similarity between the second prediction label corresponding to the first training sample and the ground-truth corresponding to the first training sample, to help improve performance of the second machine learning model in a traffic scene corresponding to the second evaluation sample. The second training sample is different from the first training sample. To be specific, the first machine learning model has higher performance in a traffic scene corresponding to the second training sample. The second loss term indicates the similarity between the second prediction label corresponding to the second training sample and the first prediction label corresponding to the second training sample, to enable the second machine learning model to learn superb performance of the first machine learning model in the traffic scene corresponding to the second training sample. Therefore, a trained second machine learning model not only has high performance in the traffic scene corresponding to the second evaluation sample, but also has high performance in the traffic scene corresponding to the second training sample. That is, a second machine learning model capable of performing well in all traffic scenes can be obtained.

Optionally, after step 209 is completed, step 201 may be performed again, to evaluate, through steps 201 to 203, the second machine learning model that has undergone the training operation. When the second machine learning model fails the evaluation, a third machine learning model may be further trained based on the second machine learning model, and the foregoing steps are repeatedly performed at least once, until a trained machine learning model succeeds in evaluation, to obtain a target machine learning model that has undergone a training operation.

The target machine learning model that has undergone the training operation may be applied to an autonomous vehicle. Optionally, the target machine learning model that has undergone the training operation may be applied to an autonomous driving decision-making system of the autonomous vehicle.

Based on the embodiments corresponding to FIG. 1b to FIG. 7, to better implement the foregoing solutions in embodiments of this application, the following further provides related devices for implementing the foregoing solutions. Specifically, FIG. 8 is a diagram of a structure of a machine learning model evaluation apparatus according to an embodiment of this application. The machine learning model evaluation apparatus 800 includes: an obtaining module 801, configured to obtain a first evaluation sample, where the first evaluation sample includes description data of a first traffic scene within first duration, the first evaluation sample includes a plurality of pieces of first segmented data, each piece of first segmented data includes description data of the first traffic scene within first sub-duration, and the first duration includes the first sub-duration; a processing module 802, configured to process the plurality of pieces of first segmented data by using a first machine learning model, to obtain a plurality of first prediction labels that are in a one-to-one correspondence with the plurality of pieces of first segmented data; and a determining module 803, configured to determine a first parameter value of at least one evaluation indicator based on the plurality of first prediction labels. The at least one evaluation indicator indicates stability of the plurality of first prediction labels generated by the first machine learning model, and/or the at least one evaluation indicator indicates accuracy of the plurality of first prediction labels generated by the first machine learning model in the first traffic scene, where the accuracy of the plurality of first prediction labels is obtained based on the plurality of first prediction labels and ground-truths corresponding to the plurality of pieces of first segmented data.

Optionally, the first evaluation sample is obtained based on road test data, and the road test data includes description data of a traffic scene that is collected when an autonomous vehicle travels on a road.

Optionally, the first parameter value of the at least one evaluation indicator failing to meet a second condition indicates that the first machine learning model fails evaluation in the first traffic scene.

Optionally, the processing module 802 is further configured to process a first training sample by using a second machine learning model, to obtain a second prediction label corresponding to the first training sample, where a similarity between the first training sample and a second evaluation sample meets a first condition, both the first training sample and the second evaluation sample include description data of the traffic scene, and the second evaluation sample is an evaluation sample that is obtained during evaluation of the first machine learning model and in which a parameter value of at least one evaluation indicator does not meet a second condition. The processing module 802 is further configured to process a second training sample by using the second machine learning model, to obtain a second prediction label corresponding to the second training sample, where the second training sample is different from the first training sample. The processing module 802 is further configured to process the second training sample by using the first machine learning model, to obtain a first prediction label corresponding to the second training sample. The machine learning model evaluation apparatus 800 further includes an update module 804, configured to update the second machine learning model based on a first loss term and a second loss term, where the first loss term indicates a similarity between the second prediction label corresponding to the first training sample and a ground-truth corresponding to the first training sample, and the second loss term indicates a similarity between the second prediction label corresponding to the second training sample and the first prediction label corresponding to the second training sample.

Optionally, the machine learning model evaluation apparatus 800 further includes: a feature extraction module 805, configured to perform feature extraction on the second evaluation sample by using the first machine learning model, to obtain feature information of the second evaluation sample. The determining module 803 is further configured to determine a first training sample set from a training sample set based on the feature information of the second evaluation sample and feature information of a training sample of the first machine learning model, where the training sample set includes a plurality of training samples of the first machine learning model, the first training sample set includes the first training sample, and a similarity between feature information of the first training sample and the feature information of the second evaluation sample meets the first condition.

Optionally, an evaluation sample set of the first machine learning model includes a plurality of evaluation samples, a target evaluation sample is any evaluation sample in the evaluation sample set of the first machine learning model, the target evaluation sample is obtained based on travel data, the travel data includes description data of the traffic scene and a raw label corresponding to the description data of the traffic scene, and the target evaluation sample includes the description data of the traffic scene and a ground-truth corresponding to the description data of the traffic scene. When the travel data is a negative sample, the ground-truth in the target evaluation sample is obtained by modifying the raw label in the travel data.

Optionally, when the travel data is the negative sample, the travel data includes description data of the traffic scene within second duration, the target evaluation sample includes description data of the traffic scene within third duration, and the second duration is greater than the third duration.

Optionally, a type of a task performed by the first machine learning model includes one or more of the following: determining whether to overtake, determining whether to give way, or determining whether to limit a speed.

It should be noted that content such as information exchange and an execution process between the modules/units in the machine learning model evaluation apparatus 800 is based on a same concept as that of the method embodiments corresponding to FIG. 1b to FIG. 7 in this application. For specific content, refer to the descriptions in the foregoing method embodiments of this application. Details are not described herein again.

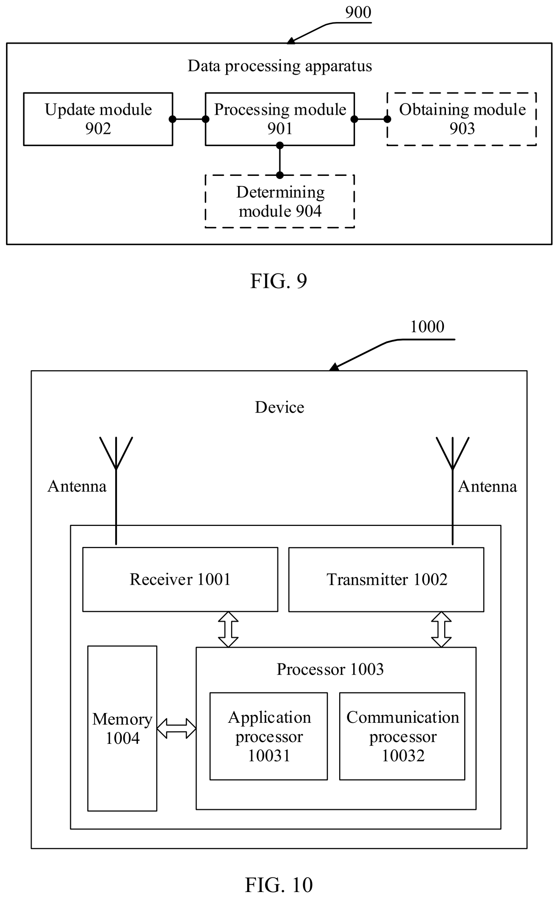

FIG. 9 is a diagram of a structure of a data processing apparatus according to an embodiment of this application. The data processing apparatus 900 includes a processing module 901, configured to process a first training sample by using a second machine learning model, to obtain a second prediction label corresponding to the first training sample, where the processing module 901 is further configured to process a second training sample by using the second machine learning model, to obtain a second prediction label corresponding to the second training sample, where both the second training sample and the first training sample include description data of a traffic scene, and the second training sample and the first training sample correspond to different traffic scenes; and the processing module 901 is further configured to process the second training sample by using a first machine learning model, to obtain a first prediction label corresponding to the second training sample; and an update module 902, configured to update the second machine learning model based on a first loss term and a second loss term, where the first loss term indicates a similarity between the second prediction label corresponding to the first training sample and a ground-truth corresponding to the first training sample, and the second loss term indicates a similarity between the second prediction label corresponding to the second training sample and the first prediction label corresponding to the second training sample.

Optionally, the first training sample is determined based on a second evaluation sample, and the second evaluation sample is an evaluation sample that is obtained during evaluation of the first machine learning model and in which a parameter value of at least one evaluation indicator does not meet a second condition.

Optionally, the data processing apparatus 900 further includes: an obtaining module 903, configured to obtain a first evaluation sample, where the first evaluation sample includes description data of a first traffic scene within first duration, the first evaluation sample includes a plurality of pieces of first segmented data, each piece of first segmented data includes description data of the first traffic scene within first sub-duration, and the first duration includes the first sub-duration. The processing module 901 is further configured to process the plurality of pieces of first segmented data by using the first machine learning model, to obtain a plurality of first prediction labels that are in a one-to-one correspondence with the plurality of pieces of first segmented data. The data processing apparatus 900 further includes a determining module 904, configured to determine a first parameter value of the at least one evaluation indicator based on the plurality of first prediction labels. The first parameter value of the at least one evaluation indicator meeting the second condition indicates that the first machine learning model succeeds in evaluation in the first traffic scene, and the at least one evaluation indicator indicates stability of the plurality of first prediction labels generated by the first machine learning model, and/or the at least one evaluation indicator indicates accuracy of the plurality of first prediction labels generated by the first machine learning model in the first traffic scene, where the accuracy of the plurality of first prediction labels is obtained based on the plurality of first prediction labels and ground-truths corresponding to the plurality of pieces of first segmented data.

It should be noted that content such as information exchange and an execution process between the modules/units in the data processing apparatus 900 is based on a same concept as that of the method embodiments corresponding to FIG. 1b to FIG. 7 in this application. For specific content, refer to the descriptions in the foregoing method embodiments of this application. Details are not described herein again.

An embodiment of this application further provides a device. FIG. 10 is a diagram of a structure of a device according to an embodiment of this application. The device 1000 includes a receiver 1001, a transmitter 1002, a processor 1003, and a memory 1004 (there may be one or more processors 1003 in the device 1000, and one processor is used as an example in FIG. 10). The processor 1003 may include an application processor 10031 and a communication processor 10032. In some embodiments of this application, the receiver 1001, the transmitter 1002, the processor 1003, and the memory 1004 may be connected through a bus or in another manner.

The memory 1004 may include a read-only memory and a random access memory, and provide instructions and data for the processor 1003. A part of the memory 1004 may further include a non-volatile random access memory (non-volatile random access memory, NVRAM). The memory 1004 stores processor and operation instructions, an executable module, or a data structure, or a subset thereof, or an extended set thereof. The operation instructions may include various operation instructions for implementing various operations.

The processor 1003 controls an operation of the execution device. During specific application, the components of the execution device are coupled together through a bus system. In addition to a data bus, the bus system may further include a power bus, a control bus, a status signal bus, and the like. However, for clarity of description, various buses are marked as the bus system in the figure.

The methods disclosed in the foregoing embodiments of this application may be applied to the processor 1003 or implemented by the processor 1003. The processor 1003 may be an integrated circuit chip and has a signal processing capability. During implementation, the steps of the foregoing methods may be performed by a hardware integrated logic circuit in the processor 1003 or by using instructions in a form of software. The processor 1003 may be a general-purpose processor, a digital signal processor (digital signal processor, DSP), a microprocessor, or a microcontroller. The processor 1003 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 1003 may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1004, and the processor 1003 reads information in the memory 1004 and performs the steps of the foregoing methods in combination with hardware of the processor 1003.

The receiver 1001 may be configured to receive input digit or character information, and generate a signal input related to a related setting and function control of the execution device. The transmitter 1002 may be configured to output digit or character information through a first interface. The transmitter 1002 may be further configured to send instructions to a disk group through the first interface, to modify data in the disk group. The transmitter 1002 may further include a display device, for example, a display.

In this embodiment of this application, the processor 1003 may be configured to perform the methods performed by the first device, the second device, and/or the third device in the embodiments corresponding to FIG. 1b to FIG. 7. It should be noted that a specific manner of performing the foregoing steps by the processor 1003 is based on a same concept as that of the method embodiments corresponding to FIG. 1b to FIG. 7 in this application, and technical effects of this embodiment of this application is the same as that of the method embodiments corresponding to FIG. 1b to FIG. 7 in this application. For specific content, refer to the descriptions in the method embodiments in this application. Details are not described herein again.

An embodiment of this application further provides a computer-readable storage medium. The computer-readable storage medium stores a program. When the program is run on a computer, the computer is enabled to perform the steps performed by the first device, the second device, and/or the third device in the methods described in the embodiments shown in FIG. 1b to FIG. 7.

An embodiment of this application further provides a computer program product. The computer program product includes a program. When the program is run on a computer, the computer is enabled to perform the steps performed by the first device, the second device, and/or the third device in the methods described in the embodiments shown in FIG. 1b to FIG. 7.

An embodiment of this application further provides a circuit system. The circuit system includes a processing circuit. The processing circuit is configured to perform the steps performed by the first device, the second device, and/or the third device in the methods described in the embodiments shown in FIG. 1b to FIG. 7.

The machine learning model evaluation apparatus, the data processing apparatus, or the device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, to enable the chip to perform the methods described in the embodiments shown in FIG. 1b to FIG. 7. Optionally, the storage unit is a storage unit in the chip, for example, a register or a buffer. Alternatively, the storage unit may be a storage unit in a radio access device but outside the chip, for example, a read-only memory (read-only memory, ROM), another type of static storage device that can store static information and instructions, or a random access memory (random access memory, RAM).

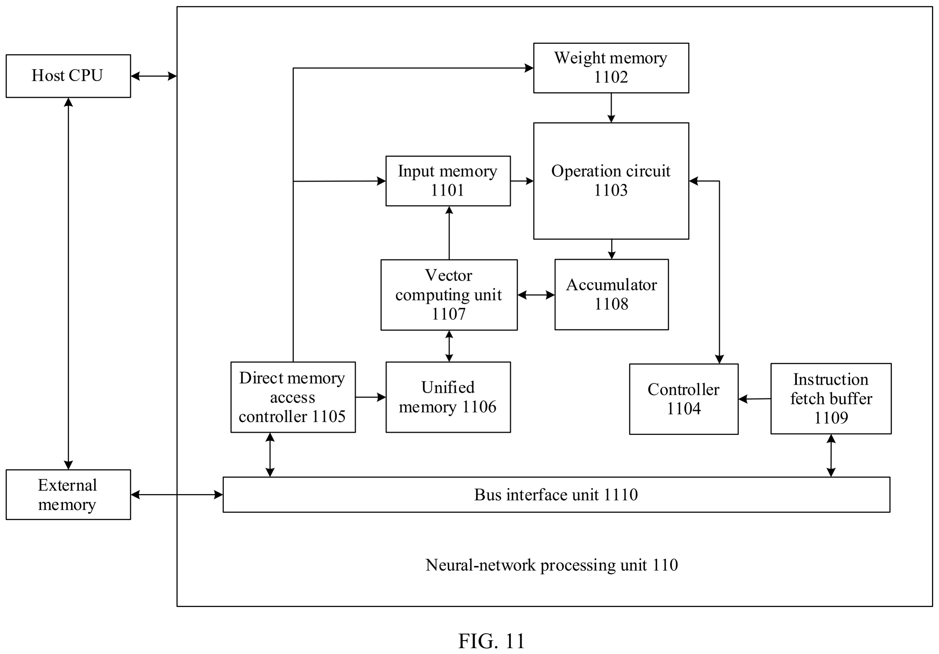

Specifically, FIG. 11 is a diagram of a structure of a chip according to an embodiment of this application. The chip may be represented by a neural-network processing unit NPU 110. The NPU 110 is mounted to a host CPU (Host CPU) as a coprocessor, and the host CPU assigns a task to the NPU 110. A core part of the NPU is an operation circuit 1103. A controller 1104 controls the operation circuit 1103 to extract matrix data in a memory and perform a multiplication operation.

In some implementations, the operation circuit 1103 includes a plurality of process engines (Process Engine, PE). In some implementations, the operation circuit 1103 is a two-dimensional systolic array. The operation circuit 1103 may alternatively be a one-dimensional systolic array or another electronic circuit capable of performing mathematical operations such as multiplication and addition. In some implementations, the operation circuit 1103 is a general-purpose matrix processor.

For example, it is assumed that there is an input matrix A, a weight matrix B, and an output matrix C. The operation circuit fetches, from a weight memory 1102, data corresponding to the matrix B, and caches the data in each PE in the operation circuit. The operation circuit fetches data of the matrix A from an input memory 1101 to perform a matrix operation on the matrix B, and stores an obtained partial result or an obtained final result of the matrix in an accumulator (accumulator) 1108.

A unified memory 1106 is configured to store input data and output data. Weight data is directly transferred to the weight memory 1102 through a direct memory access controller (Direct Memory Access Controller, DMAC) 1105. Input data is also transferred to the unified memory 1106 through the DMAC.

A BIU is a bus interface unit, namely, a bus interface unit 1110, and is used for interaction between an AXI bus, and the DMAC and an instruction fetch buffer (Instruction Fetch Buffer, IFB) 1109.

The bus interface unit (Bus Interface Unit, BIU for short) 1110 is used for the instruction fetch buffer 1109 to obtain instructions from an external memory, and is further used for the direct memory access controller 1105 to obtain raw data of the input matrix A or the weight matrix B from the external memory.

The DMAC is mainly configured to transfer input data in the external memory DDR to the unified memory 1106, transfer weight data to the weight memory 1102, or transfer input data to the input memory 1101.

A vector computing unit 1107 includes a plurality of operation processing units, and if needed, performs further processing, for example, vector multiplication, vector addition, an exponential operation, a logarithmic operation, or magnitude comparison, on output of the operation circuit. The vector computing unit is mainly used for network computing, for example, batch normalization (batch normalization), pixel-level summation, or upsampling on a feature plane, at a non-convolutional/fully connected layer of a neural network.

In some implementations, the vector computing unit 1107 can store a processed output vector in the unified memory 1106. For example, the vector computing unit 1107 may apply a linear function and/or a non-linear function to the output of the operation circuit 1103, for example, perform linear interpolation on a feature plane extracted at a convolutional layer, or for another example, use a vector of an accumulated value to generate an activation value. In some implementations, the vector computing unit 1107 generates a normalized value, a pixel-level summation value, or both a normalized value and a pixel-level summation value. In some implementations, the processed output vector can be used as an activation input for the operation circuit 1103, for example, used at a subsequent layer in the neural network.

The instruction fetch buffer (instruction fetch buffer) 1109 connected to the controller 1104 is configured to store instructions to be used by the controller 1104.

All of the unified memory 1106, the input memory 1101, the weight memory 1102, and the instruction fetch buffer 1109 are on-chip memories. The external memory is private for a hardware architecture of the NPU.

An operation at each layer in the machine learning models shown in FIG. 1b to FIG. 7 may be performed by the operation circuit 1103 or the vector computing unit 1107.

Any aforementioned processor may be a general-purpose central processing unit, a microprocessor, an ASIC, or one or more integrated circuits for controlling program execution of the method according to the first aspect.

In addition, it should be noted that the described apparatus embodiments are merely examples. The units described as separate parts may or may not be physically separated, and parts shown as units may or may not be physical units, to be specific, may be located in one place, or may be distributed on a plurality of network units. Some or all of the modules may be selected according to actual requirements to achieve the objectives of the solutions of embodiments. In addition, in the accompanying drawings of the apparatus embodiments provided in this application, a connection relationship between modules indicates that the modules have a communication connection, which may be specifically implemented as one or more communication buses or signal cables.

According to the descriptions of the foregoing implementations, a person skilled in the art can clearly understand that this application may be implemented by software in combination with necessary general-purpose hardware, or certainly may be implemented by dedicated hardware, including an application-specific integrated circuit, a dedicated CLU, a dedicated memory, a dedicated component, or the like. Usually, any function performed by a computer program may be easily implemented by corresponding hardware. In addition, a specific hardware structure used to implement a same function may be in various forms, for example, in a form of an analog circuit, a digital circuit, or a dedicated circuit. However, in this application, an implementation by using a software program is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk drive, a ROM, a RAM, a magnetic disk, or a compact disc of a computer, and includes several instructions for instructing a computer device (which may be a personal computer, a server, a network device, or the like) to perform the methods described in embodiments of this application.

All or some of the foregoing embodiments may be implemented by software, hardware, firmware, or any combination thereof. When the embodiments are implemented by software, all or some of the embodiments may be implemented in a form of a computer program product.

The computer program product includes one or more computer instructions. When the computer program instructions are loaded and executed on a computer, all or some of the processes or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be stored on the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

## Claims

1. A machine learning model evaluation method, wherein the method comprises:
obtaining a first evaluation sample, wherein the first evaluation sample comprises description data of a first traffic scene within first duration, the first evaluation sample comprises a plurality of pieces of first segmented data, each piece of first segmented data comprises description data of the first traffic scene within first sub-duration, and the first duration comprises the first sub-duration;
processing the plurality of pieces of first segmented data by using a first machine learning model, to obtain a plurality of first prediction labels that are in a one-to-one correspondence with the plurality of pieces of first segmented data; and
determining a first parameter value of at least one evaluation indicator based on the plurality of first prediction labels, wherein
the at least one evaluation indicator indicates stability of the plurality of first prediction labels generated by the first machine learning model, and/or the at least one evaluation indicator indicates accuracy of the plurality of first prediction labels generated by the first machine learning model in the first traffic scene, wherein the accuracy of the plurality of first prediction labels is obtained based on the plurality of first prediction labels and ground-truths corresponding to the plurality of pieces of first segmented data.

2. The method according to claim 1, wherein the first evaluation sample is obtained based on road test data, and the road test data comprises description data of a traffic scene that is collected when an autonomous vehicle travels on a road.

3. The method according to claim 1 or 2, wherein the first parameter value of the at least one evaluation indicator failing to meet a second condition indicates that the first machine learning model fails evaluation in the first traffic scene.

4. The method according to claim 1 or 2, wherein after determining the first parameter value of the at least one evaluation indicator based on the plurality of first prediction labels, the method further comprises:
processing a first training sample by using a second machine learning model, to obtain a second prediction label corresponding to the first training sample, wherein a similarity between the first training sample and a second evaluation sample meets a first condition, both the first training sample and the second evaluation sample comprise description data of the traffic scene, and the second evaluation sample is an evaluation sample that is obtained during evaluation of the first machine learning model and in which a parameter value of the at least one evaluation indicator does not meet a second condition;
processing a second training sample by using the second machine learning model, to obtain a second prediction label corresponding to the second training sample, wherein the second training sample is different from the first training sample;
processing the second training sample by using the first machine learning model, to obtain a first prediction label corresponding to the second training sample; and
updating the second machine learning model based on a first loss term and a second loss term, wherein the first loss term indicates a similarity between the second prediction label corresponding to the first training sample and a ground-truth corresponding to the first training sample, and the second loss term indicates a similarity between the second prediction label corresponding to the second training sample and the first prediction label corresponding to the second training sample.

5. The method according to claim 4, wherein the method further comprises:
performing feature extraction on the second evaluation sample by using the first machine learning model, to obtain feature information of the second evaluation sample; and
determining a first training sample set from a training sample set based on the feature information of the second evaluation sample and feature information of a training sample of the first machine learning model, wherein the training sample set comprises a plurality of training samples of the first machine learning model, the first training sample set comprises the first training sample, and a similarity between feature information of the first training sample and the feature information of the second evaluation sample meets the first condition.

6. The method according to claim 1 or 2, wherein an evaluation sample set of the first machine learning model comprises a plurality of evaluation samples, a target evaluation sample is any evaluation sample in the evaluation sample set of the first machine learning model, the target evaluation sample is obtained based on travel data, the travel data comprises description data of the traffic scene and a raw label corresponding to the description data of the traffic scene, and the target evaluation sample comprises the description data of the traffic scene and a ground-truth corresponding to the description data of the traffic scene, wherein
when the travel data is a negative sample, the ground-truth in the target evaluation sample is obtained by modifying the raw label in the travel data.

7. The method according to claim 6, wherein
when the travel data is the negative sample, the travel data comprises description data of the traffic scene within second duration, the target evaluation sample comprises description data of the traffic scene within third duration, and the second duration is greater than the third duration.

8. The method according to claim 1 or 2, wherein a type of a task performed by the first machine learning model comprises one or more of the following: determining whether to overtake, determining whether to give way, or determining whether to limit a speed.

9. A data processing method, wherein the method comprises:
processing a first training sample by using a second machine learning model, to obtain a second prediction label corresponding to the first training sample;
processing a second training sample by using the second machine learning model, to obtain a second prediction label corresponding to the second training sample, wherein both the second training sample and the first training sample comprise description data of a traffic scene, and the second training sample and the first training sample correspond to different traffic scenes;
processing the second training sample by using a first machine learning model, to obtain a first prediction label corresponding to the second training sample; and
updating the second machine learning model based on a first loss term and a second loss term, wherein the first loss term indicates a similarity between the second prediction label corresponding to the first training sample and a ground-truth corresponding to the first training sample, and the second loss term indicates a similarity between the second prediction label corresponding to the second training sample and the first prediction label corresponding to the second training sample.

10. The method according to claim 9, wherein a similarity between the first training sample and a second evaluation sample meets a first condition, and the second evaluation sample is an evaluation sample that is obtained during evaluation of the first machine learning model and in which a parameter value of at least one evaluation indicator does not meet a second condition.

11. The method according to claim 10, wherein before processing the first training sample by using the second machine learning model, the method further comprises:
obtaining a first evaluation sample, wherein the first evaluation sample comprises description data of a first traffic scene within first duration, the first evaluation sample comprises a plurality of pieces of first segmented data, each piece of first segmented data comprises description data of the first traffic scene within first sub-duration, and the first duration comprises the first sub-duration;
processing the plurality of pieces of first segmented data by using the first machine learning model, to obtain a plurality of first prediction labels that are in a one-to-one correspondence with the plurality of pieces of first segmented data; and
determining a first parameter value of the at least one evaluation indicator based on the plurality of first prediction labels, wherein
the first parameter value of the at least one evaluation indicator meeting the second condition indicates that the first machine learning model succeeds in evaluation in the first traffic scene, and the at least one evaluation indicator indicates stability of the plurality of first prediction labels generated by the first machine learning model, and/or the at least one evaluation indicator indicates accuracy of the plurality of first prediction labels generated by the first machine learning model in the first traffic scene, wherein the accuracy of the plurality of first prediction labels is obtained based on the plurality of first prediction labels and ground-truths corresponding to the plurality of pieces of first segmented data.

12. A machine learning model evaluation apparatus, wherein the apparatus comprises:
an obtaining module, configured to obtain a first evaluation sample, wherein the first evaluation sample comprises description data of a first traffic scene within first duration, the first evaluation sample comprises a plurality of pieces of first segmented data, each piece of first segmented data comprises description data of the first traffic scene within first sub-duration, and the first duration comprises the first sub-duration;
a processing module, configured to process the plurality of pieces of first segmented data by using a first machine learning model, to obtain a plurality of first prediction labels that are in a one-to-one correspondence with the plurality of pieces of first segmented data; and
a determining module, configured to determine a first parameter value of at least one evaluation indicator based on the plurality of first prediction labels, wherein
the at least one evaluation indicator indicates stability of the plurality of first prediction labels generated by the first machine learning model, and/or the at least one evaluation indicator indicates accuracy of the plurality of first prediction labels generated by the first machine learning model in the first traffic scene, wherein the accuracy of the plurality of first prediction labels is obtained based on the plurality of first prediction labels and ground-truths corresponding to the plurality of pieces of first segmented data.

13. The apparatus according to claim 12, wherein the first evaluation sample is obtained based on road test data, and the road test data comprises description data of a traffic scene that is collected when an autonomous vehicle travels on a road.

14. The apparatus according to claim 12 or 13, wherein the first parameter value of the at least one evaluation indicator failing to meet a second condition indicates that the first machine learning model fails evaluation in the first traffic scene.

15. The apparatus according to claim 12 or 13, wherein
the processing module is further configured to process a first training sample by using a second machine learning model, to obtain a second prediction label corresponding to the first training sample, wherein a similarity between the first training sample and a second evaluation sample meets a first condition, both the first training sample and the second evaluation sample comprise description data of the traffic scene, and the second evaluation sample is an evaluation sample that is obtained during evaluation of the first machine learning model and in which a parameter value of the at least one evaluation indicator does not meet a second condition;
the processing module is further configured to process a second training sample by using the second machine learning model, to obtain a second prediction label corresponding to the second training sample, wherein the second training sample is different from the first training sample;
the processing module is further configured to process the second training sample by using the first machine learning model, to obtain a first prediction label corresponding to the second training sample; and
the apparatus further comprises an update module, configured to update the second machine learning model based on a first loss term and a second loss term, wherein the first loss term indicates a similarity between the second prediction label corresponding to the first training sample and a ground-truth corresponding to the first training sample, and the second loss term indicates a similarity between the second prediction label corresponding to the second training sample and the first prediction label corresponding to the second training sample.

16. The apparatus according to claim 15, wherein the apparatus further comprises:
a feature extraction module, configured to perform feature extraction on the second evaluation sample by using the first machine learning model, to obtain feature information of the second evaluation sample, wherein
the determining module is further configured to determine a first training sample set from a training sample set based on the feature information of the second evaluation sample and feature information of a training sample of the first machine learning model, wherein the training sample set comprises a plurality of training samples of the first machine learning model, the first training sample set comprises the first training sample, and a similarity between feature information of the first training sample and the feature information of the second evaluation sample meets the first condition.

17. The apparatus according to claim 12 or 13, wherein an evaluation sample set of the first machine learning model comprises a plurality of evaluation samples, a target evaluation sample is any evaluation sample in the evaluation sample set of the first machine learning model, the target evaluation sample is obtained based on travel data, the travel data comprises description data of the traffic scene and a raw label corresponding to the description data of the traffic scene, and the target evaluation sample comprises the description data of the traffic scene and a ground-truth corresponding to the description data of the traffic scene, wherein
when the travel data is a negative sample, the ground-truth in the target evaluation sample is obtained by modifying the raw label in the travel data.

18. The apparatus according to claim 17, wherein
when the travel data is the negative sample, the travel data comprises description data of the traffic scene within second duration, the target evaluation sample comprises description data of the traffic scene within third duration, and the second duration is greater than the third duration.

19. The apparatus according to claim 12 or 13, wherein a type of a task performed by the first machine learning model comprises one or more of the following: determining whether to overtake, determining whether to give way, or determining whether to limit a speed.

20. A data processing apparatus, wherein the apparatus comprises:
a processing module, configured to process a first training sample by using a second machine learning model, to obtain a second prediction label corresponding to the first training sample, wherein
the processing module is further configured to process a second training sample by using the second machine learning model, to obtain a second prediction label corresponding to the second training sample, wherein both the second training sample and the first training sample comprise description data of a traffic scene, and the second training sample and the first training sample correspond to different traffic scenes; and
the processing module is further configured to process the second training sample by using the first machine learning model, to obtain a first prediction label corresponding to the second training sample; and
an update module, configured to update the second machine learning model based on a first loss term and a second loss term, wherein the first loss term indicates a similarity between the second prediction label corresponding to the first training sample and a ground-truth corresponding to the first training sample, and the second loss term indicates a similarity between the second prediction label corresponding to the second training sample and the first prediction label corresponding to the second training sample.

21. The apparatus according to claim 20, wherein a similarity between the first training sample and a second evaluation sample meets a first condition, and the second evaluation sample is an evaluation sample that is obtained during evaluation of the first machine learning model and in which a parameter value of at least one evaluation indicator does not meet a second condition.

22. The apparatus according to claim 21, wherein the apparatus further comprises:
an obtaining module, configured to obtain a first evaluation sample, wherein the first evaluation sample comprises description data of a first traffic scene within first duration, the first evaluation sample comprises a plurality of pieces of first segmented data, each piece of first segmented data comprises description data of the first traffic scene within first sub-duration, and the first duration comprises the first sub-duration, wherein
the processing module is further configured to process the plurality of pieces of first segmented data by using the first machine learning model, to obtain a plurality of first prediction labels that are in a one-to-one correspondence with the plurality of pieces of first segmented data; and
the apparatus further comprises a determining module, configured to determine a first parameter value of the at least one evaluation indicator based on the plurality of first prediction labels, wherein
the first parameter value of the at least one evaluation indicator meeting the second condition indicates that the first machine learning model succeeds in evaluation in the first traffic scene, and the at least one evaluation indicator indicates stability of the plurality of first prediction labels generated by the first machine learning model, and/or the at least one evaluation indicator indicates accuracy of the plurality of first prediction labels generated by the first machine learning model in the first traffic scene, wherein the accuracy of the plurality of first prediction labels is obtained based on the plurality of first prediction labels and ground-truths corresponding to the plurality of pieces of first segmented data.

23. A vehicle, comprising a processor, wherein the processor is coupled to a memory, the memory stores program instructions, and when the program instructions stored in the memory are executed by the processor, the method according to any one of claims 1 to 11 is implemented.

24. A computer-readable storage medium, comprising a program, wherein when the program is run on a computer, the computer is enabled to perform the method according to any one of claims 1 to 11.

25. A circuit system, wherein the circuit system comprises a processing circuit, and the processing circuit is configured to perform the method according to any one of claims 1 to 11.
